(19) Europäisches Patentamt
European Patent Office
Office européen des brevets

(11) **EP 3 094 444 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(51) Int Cl.:
**B23K 26/00** *(2014.01)*  **B23K 26/067** *(2006.01)*

(21) Anmeldenummer: **15700558.8**

(86) Internationale Anmeldenummer:
**PCT/EP2015/050489**

(22) Anmeldetag: **13.01.2015**

(87) Internationale Veröffentlichungsnummer:
**WO 2015/107044 (23.07.2015 Gazette 2015/29)**

(54) **BEARBEITUNGSVORRICHTUNG UND -VERFAHREN ZUR LASERBEARBEITUNG EINER OBERFLÄCHE**

DEVICE AND METHOD FOR LASER SURFACE TREATMENTS

APPAREIL ET PROCÉDÉ POUR TRAITER UNE SURFACE PAR LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2014 DE 102014200633**

(43) Veröffentlichungstag der Anmeldung:
**23.11.2016 Patentblatt 2016/47**

(73) Patentinhaber: **Fraunhofer-Gesellschaft zur Förderung der angewandten Forschung e.V.
80686 München (DE)**

(72) Erfinder:
• **EIFEL, Stephan
50679 Köln (DE)**
• **BÜSING, Lasse
52072 Aachen (DE)**

• **GATEJ, Alexander
76133 Karlsruhe (DE)**
• **TRAUB, Martin
52146 Würselen (DE)**
• **GILLNER, Arnold
52159 Roetgen (DE)**
• **HOLTKAMP, Jens
41849 Wassenberg (DE)**
• **RYLL, Joachim
52159 Roetgen-Rott (DE)**
• **GRETZKI, Patrick
52074 Aachen (DE)**

(74) Vertreter: **Pfenning, Meinig & Partner mbB
Patent- und Rechtsanwälte
Theresienhöhe 11a
80339 München (DE)**

(56) Entgegenhaltungen:
**WO-A1-94/09989    US-A1- 2013 084 046**

**Beschreibung**

Die Erfindung betrifft eine Bearbeitungsvorrichtung zur Laserbearbeitung einer Oberfläche, mit welcher ein Laserstrahlbündel mittels einer Rotationseinheit umlaufend um eine optische Achse parallel versetzbar ist, das versetzte Laserstrahlbündel mit einer Divergenzeinheit in eine Mehrzahl von Teilstrahlbündel auffächerbar ist, die Mehrzahl von Teilstrahlbündel jeweils fokussierbar sind, einige der Teilstrahlbündel aus dem entstehenden Gesamtstrahlenbündel entfernbar sind, Winkel von Strahlen der Teilstrahlbündel zueinander jeweils verkleinerbar sind, die verbleibenden Teilstrahlbündel zeitabhängig ablenkbar sind und die verbleibenden Teilstrahlbündel jeweils fokussierbar sind.

Die Erfindung betrifft außerdem ein entsprechendes Verfahren

Aus der WO94/09989 ist eine Bearbeitungsvorrichtung zur Laserbearbeitung einer Oberfläche bekannt, aufweisend einen Laserstrahleingang, an welchem ein Laserstrahlbündel in einer Strahlrichtung auf einer optischen Achse einstrahlbar ist, zumindest eine in Strahlrichtung angeordnete Einheit, mit welcher das Laserstrahlbündel in eine Mehrzahl von Teilstrahlbündeln auffächerbar ist, die in Richtung radial zur optischen Achse eine kontinuierliche oder diskontinuierliche Intensitätsverteilung bilden, wobei die Mehrzahl der Teilstrahlbündel ein Gesamtstrahlenbündel darstellt, ein in Strahlrichtung hinter der Einheit angeordnete erstes Modul, mit dem die Teilstrahlbündel jeweils fokussierbar sind, eine Selektionseinheit, mit der ein Teil der Teilstrahlbündel aus dem Gesamtstrahlenbündel entfernbar ist, ein in Strahlrichtung hinter dem ersten Modul angeordnetes zweites Modul, mit dem Winkel von Strahlen der Teilstrahlbündel jeweils zueinander verkleinerbar sind, eine in Strahlrichtung hinter dem zweiten Modul angeordnete Umlenkeinheit, mit der die Teilstrahlbündel zeitabhängig ablenkbar sind, und eine in Strahlrichtung hinter dem zweiten Modul angeordnete Fokussiereinheit, mit der die verbleibenden Teilstahlbündel des Gesamtstrahlenbündels jeweils fokussierbar sind.

Bei der Laserbearbeitung mit gepulster oder kontinuierlicher (continuous wave) Laserstrahlung stehen aufgrund der ständigen Weiterentwicklung der Laserstrahlquellen immer höhere mittlere Laserleistungen zur Verfügung. Auf dem Markt der Ultrakurzpulslaserstrahlquellen gab es in den letzten Jahren einen deutlichen Anstieg der mittleren Laserleistungen industriell verwendbarer Lasersysteme. So sind heute industrietaugliche UKP-Laserquellen mit Ausgangleistungen im Bereich von 50-150 W kommerziell verfügbar. Laserquellen mit Leistungen von 400 W und mehr werden in den kommenden Jahren den Markt erobern. Die höhere mittlere Leistung kann dazu verwendet werden einen Laserprozess durch Verwendung höherer Intensitäten oder der Bestrahlung größerer Flächen zu beschleunigen. In vielen Anwendungen, vor allem in der Lasermikrobearbeitung, sind jedoch oft kleine Spotdurchmesser zur Erzielung hoher Genauigkeiten an Geometrie gefragt. Mit einer Erhöhung der mittleren Laserleistung bei gleichbleibend kleiner Spotgeometrie kann jedoch aufgrund zu großem Energieeintrag nur bedingt eine Erhöhung der Prozessgeschwindigkeit bei gleichbleibender Qualität der Bearbeitung erzielt werden. Damit existiert für jeden Prozess meist eine maximale Grenze an sinnvoller Laserleistung bzw. Laserintensität für einen definierten Bearbeitungspunkt. Um die Prozessgeschwindigkeit bei gleich bleibendem Spotdurchmesser dennoch zu erhöhen, können generell zwei Ansätze verfolgt werden: Der erste Ansatz ist eine zeitlich schnellere Verteilung der Laserenergie auf dem Werkstück durch schnelle Bewegung des Werkstücks oder des Laserspots. Der zweite Ansatz beinhaltet eine Aufteilung der Laserleistung auf eine größere Fläche. Als Beispiel für den zweiten Ansatz kann eine Parallelbearbeitung mit mehreren Bearbeitungspunkten gesehen werden.

Die genannten Ansätze können durch Scansysteme umgesetzt werden, die eine schnelle Strahlbewegung und/oder Strahlformung realisieren können. Dazu existieren auf dem Markt einige Scansysteme wie beispielsweise Galvanometerscanner oder Polygonscanner.

Mit der weiteren Erhöhung der mittleren Laserleistungen reichen bereits heute die Scangeschwindigkeiten klassischer Scansysteme nicht mehr aus, um die Laserleistung in einem Strahl umzusetzen.

Aufgabe der vorliegenden Erfindung ist es daher, eine Bearbeitungsvorrichtung zur Laserbearbeitung einer Oberfläche anzugeben, die auch bei sehr hohen Laserleistungen eine hochpräzise Überarbeitung der Oberfläche mit Lasern ermöglicht. Aufgabe ist es außerdem, ein entsprechendes Verfahren zur Laserbearbeitung anzugeben.

Diese Aufgabe wird gelöst durch die Bearbeitungsvorrichtung zur Laserbearbeitung einer Oberfläche nach Anspruch 1 und das Verfahren zur Laserbearbeitung nach Anspruch 16. Die abhängigen Ansprüche geben vorteilhafte Weiterbildungen der erfindungsgemäßen Bearbeitungsvorrichtung und des erfindungsgemäßen Verfahrens an.

Erfindungsgemäß wird eine Bearbeitungsvorrichtung zur Laserbearbeitung einer Oberfläche angegeben, mit der eine Mehrzahl von Teilstrahlbündeln über eine zu bearbeitende Oberfläche bewegbar sind.

Die Bearbeitungsvorrichtung weist einen Laserstrahleingang auf, an welchem ein Laserstrahlbündel einstrahlbar ist. Die Richtung, in welcher das Laserstrahlbündel einstrahlbar ist, wird hier als Strahlrichtung bezeichnet. Die Strahlrichtung des eingestrahlten Laserstrahlbündels definiert auch die optische Achse des Systems. Die optische Achse des Systems soll hier als durchgehende Gerade verstanden werden, die jedoch bei gegebenenfalls vorhandenen Umlenkspiegeln entsprechend abgewinkelt wird.

Unter einem Strahlbündel, also insbesondere einem Laserstrahlbündel und einem Teilstrahlbündel, soll hier vorzugsweise eine Menge von Strahlen verstanden werden, die sich in einem bestimmten Winkelbereich um einen Hauptstrahl des entsprechenden Strahlbündels oder in einem bestimmten Abstandsbereich (vorzugsweise gemessen in Richtung senkrecht zum Hauptstrahl) vom Hauptstrahl ausbreiten. Jedem Strahlbündel ist also bevorzugt ein Hauptstrahl sowie eine Menge von Strahlen um diesen Hauptstrahl zugeordnet. Der Winkelbereich bzw. der Abstandsbereich kann eine endliche Größe haben oder infinitesimal sein. Das Teilstrahlbündel wird bevorzugt durch den Abstandsbereich anstelle des Winkelbereiches definiert, wenn das Strahlbündel kollimiert ist. Unter einem Strahl wird hier vorteilhafterweise die Flugbahn eines Photons oder eine senkrecht auf der Wellenfront des Strahlbündels stehende Gerade auf verstanden.

Alternativ kann das Strahlbündel in einem Bild der geometrischen Optik beschrieben werden als eine Vielzahl von Strahlen, die relativ zu einem Hauptstrahl jeweils einen Winkel aufweisen, der sich über die freie Propagation nicht ändert. Insgesamt lässt sich aus der Gesamtheit aller Winkel zwischen dem Hauptstrahl und den anderen Strahlen eine Winkelverteilung definieren.

Der Hauptstrahl kann dann jener Strahl sein, der durch das Zentrum der Eintrittspupille verläuft. Vorzugsweise ist die Eintrittspupille die freie Apertur des Laserstrahleingangs in das optische System. Das Laserstrahlbündel kann in einer Ebene senkrecht zur optischen Achse eine Intensitätsverteilung bilden, die im zeitlichen Mittel die örtliche Energieverteilung des Laserstrahlbündels beschreibt.

Erfindungsgemäß ist in Strahlrichtung hinter dem Laserstrahleingang eine Rotationseinheit angeordnet, durch welche das Laserstrahlbündel gegenüber der optischen Achse in einer Versatzrichtung um einen Abstand parallel versetzbar ist, wobei die Versatzrichtung zeitlich um die optische Achse umläuft. Der Abstand ist vorzugsweise größer als Null, kann jedoch auch Null sein.

Dass die Rotationseinheit in Strahlrichtung hinter dem Laserstrahleingang angeordnet ist, bedeutet, dass ein am Laserstrahleingang in Strahlrichtung auf der optischen Achse eingestrahltes Laserstrahlbündel die Rotationseinheit nach dem Eintreten in die Bearbeitungsvorrichtung erreicht. Die Rotationseinheit versetzt das Laserstrahlbündel parallel gegenüber der optischen Achse um den besagten Abstand. Während also das Laserstrahlbündel auf der optischen Achse in die Rotationsvorrichtung eintritt, verlässt es diese in dem genannten Abstand zur optischen Achse, jedoch parallel zu dieser. Die Richtung von der optischen Achse zum die Rotationseinheit verlassenden Laserstrahlbündel soll hier als Versatzrichtung bezeichnet werden. Erfindungsgemäß läuft die Versatzrichtung zeitlich um die optische Achse um. Das aus der Rotationsvorrichtung austretende Laserstrahlbündel beschreibt also in einer zur optischen Achse senkrecht stehenden Ebene eine Bahn, die um die optische Achse umläuft. Ist der genannte Abstand Null, so ist keine Versatzrichtung definiert.

Vorzugsweise läuft die Versatzrichtung entlang einer geschlossenen Bahn um die optische Achse um und besonders bevorzugt kreisförmig, so dass die besagte Bahn kreisförmig ist.

Die erfindungsgemäße Bearbeitungsvorrichtung weist weiter eine in Strahlrichtung hinter der Rotationseinheit angeordnete Divergenzeinheit auf, mit welcher das Laserstrahlbündel in eine Mehrzahl von Teilstrahlbündeln auffächerbar ist. Die Divergenzeinheit kann vorzugsweise als Strahlteiler angesehen werden. Die Teilstrahlbündel können dabei in einer Ebene senkrecht zur optischen Achse eine kontinuierliche Intensitätsverteilung bilden, sie können jedoch bevorzugt auch eine Intensitätsverteilung haben, die für jedes der Teilstrahlbündel ein lokales Maximum der Intensität in besagter Ebene senkrecht zur optischen Achse hat. In diesem Fall können die Teilstrahlbündel jeweils als einzelne einzelne Laserstrahlbündel angesehen werden bzw. ausgebildet sein. Die Teilstrahlbündel können sich dabei in ihren Randbereichen mit benachbarten Teilstrahlbündel in Teilbereichen entlang der optischen Achse überlagern oder vollständig getrennt voneinander vorliegen. In letzterem Fall ist die Intensitätsverteilung in besagter Ebene diskontinuierlich. Die Verteilung der Teilstrahlbündel wird durch den Aufbau des Strahlteilers bestimmt.

Dass das Laserstrahlbündel in die Mehrzahl von Teilstahlbündeln aufgefächert wird, bedeutet vorzugsweise, dass Hauptstrahlen der Teilstrahlbündel hinter der Divergenzeinheit divergent verlaufen. Die Funktion der Divergenzeinheit kann vorteilhaft so beschrieben werden, dass sie die Hauptstrahlen in eine endliche oder unendliche Anzahl von neuen Hauptstrahlen aufteilt, die sich jeweils in ihrer Richtung relativ zur optischen Achse unterscheiden. Zu jedem neuen Hauptstrahl gibt es dann eine Menge von Strahlen, die bezogen auf den neuen Hauptstrahl die gleiche Winkelverteilung aufweisen, wie die Strahlen des in die Divergenzeinheit einfallenden Laserstrahlbündels. Ein neuer Hauptstrahl kann dann zusammen mit dieser Menge von Strahlen als Teilstrahlbündel angesehen werden. Die Divergenzeinheit führt damit zu einer Änderung der Intensitätsverteilung des einfallenden Laserstrahlbündels im Winkelraum.

Eine kontinuierliche Intensitätsverteilung kann eine in sich zusammenhängende Intensitätsverteilung sein, die durch die Divergenzeinheit gebildet wird. Durch das erste Modul kann dann jedes Teilstrahlbündel im Sinne der paraxialen geometrischen Optik in einen Punkt auf einer gemeinsamen Fokusebene mit Ausrichtung senkrecht zur optischen Achse fokussiert werden. Im kontinuierlichen Fall gibt es daher in der Fokusebene unendlich viele Punkte und somit unendlich viele Teilstrahlbündel.

Ein Beispiel für eine diskontinuierliche Intensitätsverteilung ist ein Strahlteiler (z.B. eine Aufteilung in ein Raster aus 4 mal 4 Teilstrahlbündeln), der das Laserstrahlbündel in eine endliche Anzahl von Teilstrahlbündeln aufteilt. In der Fokusebene des ersten Moduls können durch die Fokussierung in einem Bild der paraxialen Optik somit örtlich separierte Fokuspunkte entstehen. In einem Bild der beugungsbegrenzten Optik können in der Fokusebene Fokusbereiche entstehen.

Eine Kombination aus kontinuierlicher Intensitätsverteilung und diskontinuierlicher Intensitätsverteilung durch die Divergenzeinheit kann auch erfolgen. Als Beispiel dafür kann die Bildung eines Raster aus 4 mal 4 Bereichen genannt werden, die jeweils ein "F" bilden.

Die Gesamtheit der durch die Divergenzeinheit erzeugten Teilstrahlbündel soll hier als Gesamtstrahlenbündel bezeichnet werden.

Die Divergenzeinheit kann jedoch auch eine beliebige Intensitätsverteilung in besagter Ebene senkrecht zur optischen Achse erzeugen. Im einfachsten Fall kann beispielsweise die Divergenzeinheit den Strahl nach der Gittergleichung

$$\sin(\theta_n) = n \cdot \frac{\lambda}{g}$$

erzeugen, wobei $n$ die ganzzahlige Ordnung des Gitters, $\lambda$ die Wellenlänge des Laserstrahlbündels, $g$ die Gitterkonstante und $\Theta_n$ den Winkel des Hauptstrahls des Teilstrahlbündels zur optischen Achse beschreibt. Je nach Aufbau des Strahlteilers können hier zweidimensionale Raster der Intensitätsverteilung oder komplexe Intensitätsverteilungen erzeugt werden.

Wie oben beschrieben kann die Divergenzeinheit Teilstrahlbündel bilden, die eine kontinuierliche Intensitätsverteilung in einer gedachten Ebene senkrecht zur optischen Achse bilden. In diesem Fall gehen benachbarte Teilstrahlbündel ineinander über. Die Intensitätsverteilung kann dabei beliebige Formen annehmen, wobei die Form der Intensitätsverteilung durch die Divergenzeinheit vorgegeben wird. Die oben beschriebene Definition der Teilstrahlbündel ist für beliebige Divergenzeinheiten anwendbar. Jedes Gesamtstrahlenbüdel, dass durch die Divergenzeinheit gebildet wird, kann als zusammengesetzt aus einer beliebigen Zahl an Teilstrahlbündeln dargestellt werden, wobei die Winkelbereiche bzw. Abstandsbereiche, in denen sich die Strahlen eines gegebenen Teilstahlbündels um den entsprechenden Hauptstrahl erstrecken auch infinitesimal sein können. Andere Divergenzeinheiten können jedoch auch diskontinuierliche Teilstrahlbündel erzeugen, die nicht überlappen und deren Strahlen sich in einem endlichen, nicht verschwindenden Winkelbereich bzw. Abstandsbereich um den entsprechenden Hauptstrahl ausbreiten.

Die Divergenzeinheit kann bevorzugt ein diffraktives optisches Element mit einem Muster von Mikro- und/oder Nanostrukturen sein. Der Strahlteiler kann außerdem auch ein dichroitischer Strahlteiler, ein refraktives optisches Element, wie z.B. ein Mikrolinsenarray, oder ein anderes festes oder dynamisches Beugungsgitter sein, wie beispielsweise ein Spatial Light Modulator (räumlicher Lichtmodulator), ein Hologramm oder ein Grating Light Valve (Gitter-Lichtventil).

Bevorzugterweise erzeugt die Divergenzeinheit kollimierte Teilstrahlbündel.

In einer vorteilhaften Ausgestaltung der Erfindung kann die Divergenzeinheit um zumindest eine Achse, insbesondere die optische Achse, vorzugsweise um zwei oder drei zueinander senkrecht stehende Achsen, die besonders bevorzugt die optische Achse umfassen, drehbar gelagert sein.

Die erfindungsgemäße Bearbeitungsvorrichtung weist außerdem ein in Strahlrichtung hinter der Divergenzeinheit angeordnetes erstes Modul auf, mit welchem die Mehrzahl von Teilstrahlbündeln jeweils fokussierbar sind. Es werden also in jedem durch die Divergenzeinheit erzeugten Teilstrahlbündel die Strahlen des entsprechenden Teilstrahlbündels aufeinander zu abgelenkt, so dass sie sich jeweils in einem Fokuspunkt schneiden.

Vorteilhafterweise können durch das erste Modul außerdem auch Winkel der Hauptstahlen der Teilstrahlbündel zueinander verkleinert werden, wobei besonders bevorzugt die Hauptstrahlen aller Teilstrahlbündel zueinander parallelisiert werden können. Die Teilstrahlbündel können also so durch das erste Modul abgelenkt werden, dass ihre Hauptstrahlrichtungen hinter dem ersten Modul parallel zueinander verlaufen. Sind die durch die Divergenzeinheit erzeugten Teilstrahlbündel einzelne Laserstrahlen bzw. einzelne Laserstrahlbündel, so können diese hinter dem ersten Modul zueinander parallel verlaufen. Das erste Modul kann auch als erstes Relaymodul bezeichnet werden.

Das Modul ist vorzugsweise so positioniert, dass die Divergenzeinheit in einer Eintrittspupille dieses ersten Modules steht.

Die erfindungsgemäße Bearbeitungsvorrichtung weist außerdem eine in Strahlrichtung hinter dem ersten Modul angeordnete Selektionseinheit auf, mit der ein Teil der Teilstrahlbündel aus dem durch das erste Modul erzeugten Gesamtstrahlenbündel entfernbar ist. Bevorzugterweise ist die Selektionseinheit in einem Bereich entlang der optischen Achse angeordnet, in dem die Teilstrahlbündel aufgrund ihrer Fokussierung durch das erste Modul einander nicht überlappen.

In einer vorteilhaften Ausgestaltung der Erfindung kann die Selektionseinheit einen Spiegel aufweisen, der in den Strahlengang der zu entfernenden Teilstrahlbündel einbringbar ist, und mit dem vorzugsweise die zu entfernenden Teilstrahlbündel auf einen Absorber umlenkbar sind. Hierzu kann der Spiegel vorteilhaft in zwei Dimensionen bewegbar sein. Es können dadurch aus dem Gesamtstrahlenbündel bestimmte Teilstrahlbündel selektiert werden, während die restlichen Teilstrahlbündel das Selektionsmodul ungehindert durchlaufen und dem weiteren Strahlengang in der Bearbeitungsvorrichtung folgen.

Die Selektionseinheit kann auch eine Maske aufweisen, die in den Strahlengang der zu entfernenden Teilstrahlbündel bewegbar ist. Auch diese Maske kann hierzu vorzugsweise in zwei Dimensionen dynamisch bewegbar sein.

In einer Ausgestaltung der Erfindung kann die Selektionseinheit auch ein Mikrospiegelarray aufweisen, bei welchem einzelne Teilstrahlbündel auf einen oder mehrere bewegliche Spiegel treffen, die die entsprechenden Teilstrahlbündel aus dem Strahlengang des Gesamtstrahlenbündels in einen Absorber lenken, oder die alle Teilstrahlbündel, die nicht aus dem Gesamtstrahlenbündel zu entfernen sind, in Richtung der optischen Achse der Bearbeitungsvorrichtung reflektieren, so dass die zu entfernenden Teilstrahlbündel ohne abgelenkt zu werden beispielsweise auf einen Absorber treffen.

Die Selektionseinheit kann außerdem zusätzlich oder alternativ eine Maske aufweisen, die zu entfernende Teilstrahlbündel ausblendet und/oder absorbiert. Eine solche Maske kann aus dem Gesamtstrahlenbündel Teilstrahlbündel entfernen. Eine solche Maske kann auch zusätzlich zu den vorstehend beschriebenen Einheiten wie Spiegel, Maske oder statisches oder dynamisches Mikrospiegelarray in Strahlrichtung hinter dieser entsprechenden Vorrichtung eingesetzt werden, und so aus den durch den ersten Teil der Selektionseinheit nicht entfernten Teilstrahlbündeln weitere Teilstrahlbündel aus dem Gesamtstrahlenbündel zu entfernen.

Ist beispielsweise die Divergenzeinheit ein Gitter, so teilt sie das eingehende Laserstrahlbündel in Haupt- und höhere Ordnungen. Darüber hinaus existiert auch noch eine nullte Ordnung, die dem ungebeugten Licht des in die Divergenzeinheit eingekoppelten Laserstrahls entspricht. Die nullte und die höheren Beugungsordnungen sind häufig unerwünscht, da sie zu einer Verminderung der Effizienz der Divergenzeinheit führen können und in der zu bearbeitenden Oberfläche den Bearbeitungsprozess behindern können. Derartige nullte und höhere Ordnungen können mittels der Selektionseinheit, insbesondere mittels einer Maske, vorteilhafterweise aus dem Gesamtstrahlenbündel entfernt werden.

Eine derartige Maske kann beispielsweise ein Metallblech, ein beschichtetes transparentes Substrat, bei dem eine nicht transparente Beschichtung geeignete Öffnungen aufweist, oder ein Spiegel mit einem geeigneten Raster aus Bohrungen sein. Die Maske lässt dann die gewünschten Hauptordnungen unbeeinflusst propagieren während die zu selektierenden nullten und höheren Beugungsordnungen absorbiert oder in einen Absorber umgelenkt werden.

Es kann vorteilhafterweise auch mit der Selektionseinheit zumindest ein Teilstrahlbündel entfernbar sein, das eine Hauptordnung eines durch das diffraktive optische Element erzeugten Beugungsmusters ist.

In einer vorteilhaften Ausgestaltung der Erfindung kann die Selektionseinheit einen wie oben beschrieben senkrecht zur optischen Achse beweglichen Spiegel oder Maske aufweisen und zusätzlich eine Maske mit Öffnungen wie vorstehend beschrieben. Dabei kann die Maske mit den Öffnungen vor oder bevorzugt hinter dem beweglichen Spiegel bzw. der beweglichen Maske angeordnet sein.

Die erfindungsgemäße Bearbeitungsvorrichtung weist außerdem ein in Strahlrichtung hinter dem ersten Modul, vorzugsweise hinter der Selektionseinheit, angeordnetes zweites Modul auf, mit dem Winkel von Strahlen der Teilstahlbündel jeweils zueinander verkleinerbar sind. Es sind also mit dem zweiten Modul in jedem der Teilstahlbündel, die in das zweite Modul einfallen, die Winkel der Strahlen zueinander verkleinerbar. Vorzugsweise sind mit dem zweiten Modul die Teilstrahlbündel kollimierbar.

Bevorzugt ist außerdem eine Ausgestaltung der Erfindung, in der mit dem zweiten Modul Winkel der Strahlen der Teilstrahlbündel zueinander jeweils auf jene Winkel verkleinerbar sind, die gleich den entsprechenden Winkeln an der optischen Achse punktgespiegelt sind, welche die Strahlen der entsprechenden Teilstrahlbündel bei Eintreten in das erste Modul zueinander haben. Betrachtet man also eines der Teilstrahlbündel, so treten dessen Strahlen mit bestimmten Winkeln zueinander in das erste Modul ein. In dieser vorteilhaften Ausgestaltung verlassen die Strahlen das zweite Modul mit den gleichen Winkeln zueinander, aber an der optischen Achse punktgespiegelt. Das Teilstrahlbündel steht also nach Verlassen des zweiten Moduls gegenüber dem Eintritt in das erste Modul auf dem Kopf.

In einer bevorzugten Ausgestaltung der Erfindung können mit dem zweiten Modul die Hauptstrahlen der Teilstrahlbündel konvergierbar sein. Dass die Hauptstrahlen konvergierbar sind, bedeutet, dass sie durch das zweite Modul so ablenkbar sind, dass sie aufeinander zulaufen. Die Hauptstrahlrichtungen der Teilstrahlbündel werden also durch das zweite Modul so verändert, dass sich der Abstand zwischen den Hauptstrahlen der Teilstrahlbündel in Richtung senkrecht zur optischen Achse entlang der optischen Achse bis zu einem Punkt geringsten Abstands verkleinert.

Das zweite Modul kann als zweites Relaymodul bezeichnet werden. Das Relayodul kann zusammen mit den in Strahlrichtung davorliegenden Elementen, insbesondere mit dem ersten Modul das Gesamtstrahlenbündel, gegebenenfalls reduziert um mittels der Selektionseinheit entfernte Teilstrahlbündel, in eine Strahlebene abbilden, in der die Hauptstrahlen Teilstrahlbündel zueinander den geringsten Abstand haben. Das Gesamtstrahlenbündel hat hier dann seinen kleinsten Durchmesser. In dieser Ebene können sich die Hauptstrahlen der jeweiligen Teilstrahlbündel kreuzen.

Die erfindungsgemäße Bearbeitungsvorrichtung weist in Strahlrichtung hinter dem zweiten Modul, vorzugsweise vor der Fokussiereinheit, eine Umlenkeinheit auf, mit der die Teilstrahlbündel zeitabhängig ablenkbar sind. Mit der Umlenkeinheit sind also die Strahlrichtungen der Hauptstrahlen der Teilstrahlbündel ablenkbar.

Bevorzugterweise verursacht die Umlenkeinheit eine effektive Umlenkung der Teilstrahlbündel in jenem Punkt, in dem die Hauptstrahlen aufgrund ihrer durch das zweite Modul verursachten Konvergenz den geringsten Abstand voneinander haben.

Die erfindungsgemäße Bearbeitungsvorrichtung weist darüber hinaus eine Fokussiereinheit auf, mit der die verbleibenden Teilstrahlbündel des Gesamtstrahlenbündels jeweils fokussierbar sind. Vorzugsweise sind sie dabei auf die zu bearbeitende Oberfläche fokussierbar.

Die Fokussiereinheit ist vorzugsweise in Strahlrichtung hinter der Umlenkeinheit angeordnet. Vorzugsweise ist sie außerdem in Strahlrichtung hinter einem Punkt angeordnet, an dem die Hauptstrahlen der Teilstrahlbündel, die durch das zweite Modul konvergiert wurden, zueinander den geringsten Abstand haben. In diesem Fall ist also die Fokussiereinheit in einem Abstand zum zweiten Modul entlang der optischen Achse angeordnet, in dem die Hauptstrahlen der Teilstrahlbündel wieder auseinanderlaufen. Hinter der Fokussiereinheit können die Teilstrahlbündel dann parallel zueinander verlaufen.

Die Fokussiereinheit kann beispielsweise ein F-Theta-korrigierte Linse mit telezentrischen Eigenschaften sein. Zusammen mit den Strahlumlenkern lassen sich vorteilhafterweise die entstehenden Foki auf beliebigen zweidimensionalen Bahnen auf der zu bearbeitenden Oberfläche ablenken. Der durch die Rotationseinheit bedingte rotierende Strahlversatz kann in der Strahlebene, in welcher die Hauptstrahlen der Teilstrahlbündel hinter dem zweiten Modul den geringsten Abstand zueinander haben, zu einer Bewegung der Teilstrahlbündel auf einer Kreisbahn mit einem Radius *r'* führen. Dieser Strahlversatz kann zu einer Anstellung des Strahlbündels relativ zur optischen Achse der Fokussiereinheit führen, so dass das Strahlbündel in einem Winkel β seines Hauptstrahls relativ zur optischen Achse auf das Werkstück trifft.

Es ist bevorzugt, wenn am Laserstrahleingang der Bearbeitungsvorrichtung ein kollimiertes Laserstrahlbündel eintritt. Bevorzugterweise wird durch die Divergenzeinheit das Laserstrahlbündel in eine Mehrzahl von jeweils kollimierten Teilstrahlbündeln aufgefächert.

In einer vorteilhaften Ausgestaltung der Erfindung kann die Bearbeitungsvorrichtung außerdem ein Zoomsystem aufweisen, das in Strahlrichtung hinter der Divergenzeinheit, vorzugsweise hinter dem ersten Modul, angeordnet ist, und mit welchem ein Abstand zwischen den Teilstrahlbündeln bzw. zwischen den Hauptstrahlen der Teilstrahlbündel veränderbar ist. Das Zoomsystem ist also vorteilhafterweise so ausgestaltet, dass die Teilstrahlbündel in das Zoomsystem mit zueinander parallelen Hauptstrahlrichtungen in bestimmten Abständen der Hauptstrahlen zueinander eintreten und mit zueinander parallelen Hauptstrahlrichtungen mit anderen Abständen der Hauptstrahlen aus dem Zoomsystem austreten.

Besonders bevorzugt kann das Zoomsystem entlang der optischen Achse zwischen der Selektionseinheit und dem zweiten Modul angeordnet sein.

Das Zoomsystem kann vorteilhafterweise das Gesamtstrahlenbündel skalieren und so eine Änderung der Abstände der Teilstrahlbündel zueinander bewirken. Im Falle einer beliebigen kontinuierlichen Intensitätsverteilung aus endlichen oder infinitesimalen Teilstrahlbündeln kann diese durch das Zoomsystem skaliert werden.

Das Zoomsystem kann beispielsweise Festbrennweiten-Objektive, bewegte Linsen mit diskreten oder kontinuierlichen Positionen oder aktive Elemente wie beispielsweise Flüssigkeitslinsen aufweisen oder daraus bestehen und kann besonders bevorzugt motorisiert sein. Bevorzugterweise kann das Zoomsystem dabei rotationssymmetrisch sein, besonders bevorzugt mittels sphärischer oder asphärischer Linsen. Es kann hierdurch in beide Raumrichtungen senkrecht zur optischen Achse gemeinsam skaliert werden. Alternativ kann das Zoomsystem beispielsweise durch zylindrische oder azylindrische Oberflächen so ausgeführt sein, dass die Skalierung in jeder Richtung senkrecht zur optischen Achse getrennt verändert werden kann. Darüber hinaus kann vorteilhaft die Zoomfunktion auch durch Verwendung anamorphotischer Prismen realisiert werden.

Der mögliche Zoombereich kann auch einen größeren Bereich umfassen, der auch mehrere zehn Prozent betragen kann.

Es ist darüber hinaus auch möglich, das Zoomsystem an einer beliebigen Position zwischen der Divergenzeinheit und der Fokussiereinheit zu positionieren. Es kann darüber hinaus auch integraler Bestandteil einer Linsengruppe in diesem Bereich sein.

In einer weiteren vorteilhaften Ausgestaltung der Erfindung kann das Zoomsystem eine erste Gruppe von anamorphotischen Prismen bzw. Keilplatten und vorzugsweise außerdem eine zur ersten Gruppe um die optische Achse um 90° gedrehte zweite Gruppe von anamorphotischen Prismen bzw. Keilplatten aufweisen. Dass die erste Gruppe gegenüber der zweiten Gruppe um die optische Achse um 90° gedreht ist, bedeutet dabei, dass die Drehung angegeben ist unter der Annahme, dass die optische Achse von der ersten Gruppe zur zweiten Gruppe als Gerade verläuft. Wird zwischen der ersten Gruppe und der zweiten Gruppe die optische Achse, beispielsweise durch einen Ablenkspiegel, geknickt, so sind die Gruppen so gegeneinander gedreht, dass sie im Falle der Abwesenheit des Knickes zueinander um 90° um die optische Achse gedreht wären.

In einer weiteren vorteilhaften Ausgestaltung der Erfindung kann das Zoomsystem eine erste Gruppe von Zylinderlinsen und vorzugsweise außerdem eine zur ersten Gruppe um die optische Achse um 90° gedrehte zweite Gruppe von Zylinderlinsen aufweisen. Dass die erste Gruppe gegenüber der zweiten Gruppe um die optische Achse um 90° gedreht ist, bedeutet wiederrum, dass die Drehung angegeben ist unter der Annahme, dass die optische Achse von der ersten Gruppe zur zweiten Gruppe als Gerade verläuft. Wird zwischen der ersten Gruppe und der zweiten Gruppe die optische Achse, beispielsweise durch einen Ablenkspiegel, geknickt, so sind die Gruppen so gegeneinander gedreht, dass sie im Falle der Abwesenheit des Knickes zueinander um 90° um die optische Achse gedreht wären.

In dieser Ausgestaltung sind die Prismen bzw. Zylinderlinsen des ersten Paares und die Prismen bzw. Zylinderlinsen des zweiten Paares jeweils gegeneinander um Achsen drehbar, die senkrecht zur optischen Achse stehen und parallel liegen zu nicht parallelen Flächen des Prismas bzw. der Keilplatte bzw. Parallel zur gekrümmten Fläche der Zylinderlinse. Es wird dabei angenommen, dass die Teilstrahlbündel durch eine der nicht parallelen Flächen des Prismas bzw. der Keilplatte in dieses einfallen und das Prisma bzw. die Keilplatte über eine andere der nicht parallelen Flächen verlassen, da hierdurch die Strahlrichtung veränderbar ist. Entsprechendes gilt für die gekrümmte Fläche der Zylinderlinse.

Die Prismen der Gruppen sind dabei jeweils so angeordnet, dass die Achsen, um welche die Prismen drehbar sind, in der jeweiligen Gruppe parallel zueinander stehen. Diese Achsen sind bei der zweiten Gruppe gegenüber den Achsen des ersten Paares wie oben beschrieben um die optische Achse um 90° gedreht.

In einer vorteilhaften Ausgestaltung der Erfindung enthält jede Gruppe genau zwei Prismen, oder zwei Keilplatten oder vier Zylinderlinsen.

In einer vorteilhaften Ausgestaltung der Erfindung kann die Rotationseinheit als ebene Planparallelplatte, beispielsweise als Glasplatte, ausgestaltet sein, die bevorzugt gegenüber der optischen Achse um einen Winkel $\neq 0°$ und $\neq 90°$ gekippt angeordnet ist und die um die optische Achse drehbar ist. Tritt das Laserstrahlbündel auf der optischen Achse in eine solche Planparallelplatte ein, verlässt es diese mit einem parallelen Versatz gegenüber der optischen Achse.

In einer weiteren vorteilhaften Ausgestaltung der Erfindung kann die Rotationseinheit zumindest zwei entlang der optischen Achse hintereinander angeordnete Keilplatten aufweisen oder daraus bestehen, die um die optische Achse drehbar sind. Die Keilplatten sind dabei so angeordnet, dass ein entlang der optischen Achse auf die Keilplatten einfallendes Laserstrahlbündel beim Durchlaufen der Keilplatten parallel versetzt wird, diese also mit einem Abstand größer als null von der optischen Achse, aber zur optischen Achse parallel, verlässt.

Vorteilhafterweise haben die Keilplatten einen identischen Keilwinkel und Brechungsindex. Besonders bevorzugt ist ein Abstand der Keilplatten jeder Gruppe jeweils zueinander veränderbar, so dass der durch die jeweilige Gruppe bewirkte Versatz veränderbar ist.

Vorzugsweise sind die Keilplatten um eine Ebene senkrecht zur optischen Achse gespiegelt angeordnet.

In einer vorteilhaften Ausgestaltung der Erfindung kann die Rotationseinheit zwei entlang der optischen Achse hintereinander angeordnete Planparallelplatten aufweisen, die unabhängig voneinander gegenüber der optischen Achse verkippbar sind.

Die Rotationseinheit kann außerdem ein Schmidt-Pechan Prisma, einen rotierenden K-Spiegel oder ein Dove-Prisma aufweisen oder daraus bestehen, die um die optische Achse drehbar sind.

Vorzugsweise wird die Umlenkeinheit so positioniert, dass ein effektiver Drehpunkt der Umlenkeinheit in einer Ebene liegt, in der ein durch das erste und das zweite Modul erzeugtes Bild der Divergenzeinheit liegt. Als effektiver Drehpunkt kann vorteilhafterweise der räumliche Mittelpunkt (Schwerpunkt) zwischen den beiden Umlenkachsen der Umlenkeinheit angesehen werden.

Die erfindungsgemäße Bearbeitungsvorrichtung kann vorteilhaft zur Herstellung großflächiger periodischer Strukturen durch Laserablation, zur Herstellung von beliebigen Intensitätsverteilungen durch Laserablation, zum parallelen Laserbohren, Laserschneiden mit mehreren Bearbeitungspunkten und zum parallelen Wendelbohren eingesetzt werden. Generell kann die erfindungsgemäße Bearbeitungsvorrichtung vorteilhaft zur Laserbearbeitung mit einem festen Muster an Bearbeitungsspots oder einer beliebigen Intensitätsverteilung oder zur Parallelbearbeitung mit mehreren Teilstrahlbündeln eingesetzt werden, wobei in jeder Ebene des Abtrags eine andere Strahlverteilung eingestellt werden kann und dadurch auch bei größeren und nicht periodischen Abtragsgeometrien eine entsprechend der Anzahl der Teilstrahlbündel multiplizierte Abtragsleistung erzielt werden. Darüber hinaus ist die erfindungsgemäße Vorrichtung zur großflächigen Herstellung von periodischen Strukturen in dünnen Folien verwendbar. Es zeigt sich je nach Anzahl der erzeugten Strahlbündel hier eine deutliche Erhöhung der Prozessgeschwindigkeit um einen Faktor von mindestens 100 im Vergleich zur klassischen Einzelstrahlbearbeitung. Insbesondere im Bereich der Ultrakurzpulsbearbeitung können bisher nicht erreichte Produktionsraten erzielt werden.

In einer vorteilhaften Ausgestaltung der Erfindung kann die Bearbeitungsvorrichtung außerdem eine Fokusshift-Einheit aufweisen, die entlang der optischen Achse in Strahlrichtung hinter dem Laserstrahleingang und vor der Rotationseinheit angeordnet ist, und mit der Winkel zwischen Strahlen des Laserstrahlbündels so einstellbar sind, dass die Strahlen auf einen Punkt auf der optischen Achse hinter der Fokusshift-Einheit zulaufen oder in einer Projektion der Strahlen auf der optischen Achse von einem Punkt vor oder in der Fokusshift -Einheit weglaufen, wobei der Abstand des entsprechenden Punktes von der Fokusshift-Einheit entlang der optischen Achse veränderbar ist. Der Abstand ist vorzugsweise dynamisch veränderbar. Die Fokusshift-Einheit weist also vorzugsweise eine Einstellvorrichtung auf, die eine Veränderung des Abstandes ermöglicht. Der Begriff Fokusshift-Einheit wurde gewählt, da die betreffende Einheit den Fokus des ersten Moduls vor dem ersten Modul verschiebt. Das erste Modul hat also mit der Fokusshift-Einheit zusammen einen gegenüber dem ersten Modul alleine verschobenen Fokus vor dem ersten Modul.

Die Erfindung betrifft außerdem ein Verfahren zur Laserbearbeitung einer Oberfläche, wobei ein Laserstrahlbündel in einer Strahlrichtung auf einer optischen Achse eingestrahlt wird, das Laserstrahlbündel gegenüber der optischen Achse in einer Versatzrichtung um einen Abstand parallel versetzt wird, wobei die Versatzrichtung zeitlich um die optische Achse umläuft, das Laserstrahlbündel in eine Mehrzahl von Teilstrahlbündeln aufgefächert wird, die in Richtung radial zur optischen Achse eine kontinuierliche oder diskontinuierliche Intensitätsverteilung bilden, wobei die Mehrzahl der Teilstrahlbündel ein Gesamtstrahlenbündel darstellt, die Teilstrahlbündel jeweils fokussiert werden, ein Teil der Teilstrahlbündel aus dem Gesamtstrahlenbündel entfernt wird, ein Winkel zwischen Strahlen der verbleibenden Teilstrahlbündel jeweils verkleinert wird, die Teilstrahlbündel mit jeweils verkleinerten Winkeln zwischen ihren Strahlen zeitabhängig abgelenkt werden, und die verbleibenden Teilstrahlbündel des Gesamtstrahlenbündels jeweils fokussiert werden.

Vorzugsweise führt die Umlenkeinheit eine Bewegung aus, die zu einer kreisförmigen Ablenkung der Teilstrahlbündel führt. Die Teilstrahlbündel führen also vorteilhaft eine Wendelbohrbewegung durch.

Im Sprachgebrauch der Lasertechnik kann das Verfahren als synchrones Wendelbohren mit einer Vielzahl von Teilstrahlen betrachtet werden.

Bevorzugterweise kann die Rotation der Rotationseinheit mit der Ablenkung der Umlenkeinheit synchronisiert sein. Die Umlenkeinheit kann sich also mit der gleichen Frequenz und der gleichen Phase phi wie die Rotationseinheit bewegen und so eine Kreisbahn beschreiben. Auf diese Weise können senkrechte Löcher in der Oberfläche erzeugt werden.

In einer vorteilhaften Ausgestaltung kann sich der Strahlteiler während der Bearbeitung um die optische Achse drehen und es kann das Werkstück relativ zur Bearbeitungsvorrichtung bewegt werden, so dass im Werkstück eine Schneidfuge erzeugt wird.

Im Folgenden soll die Erfindung anhand einiger Figuren beispielhaft erläutert werden. Gleiche Bezugszeichen kennzeichnen dabei gleiche oder entsprechende Merkmale. Die in den Beispielen beschriebenen Merkmale können auch zwischen den Beispielen kombiniert werden und unabhängig vom konkreten Beispiel realisiert sein.

Es zeigt:

Fig. 1    einen beispielhaften Aufbau einer erfindungsgemäßen Bearbeitungsvorrichtung,

Fig. 2    einen beispielhaften Aufbau einer erfindungsgemäßen Bearbeitungsvorrichtung mit einem Zoomsystem mit Rotationssymmetrischen Linsen,

Fig. 3    einen beispielhaften Aufbau einer erfindungsgemäßen Bearbeitungsvorrichtung mit Anordnungen von Keilplatten als Zoomsystem,

Fig. 4    einen beispielhaften Aufbau einer erfindungsgemäßen Bearbeitungsvorrichtung mit einer rotierenden Planparallelplatte als Rotationseinheit,

Fig. 5    einen beispielhaften Aufbau einer erfindungsgemäßen Bearbeitungsvorrichtung mit einer verkippbaren Divergenzeinheit,

Fig. 6    einen beispielhaften Aufbau einer erfindungsgemäßen Bearbeitungsvorrichtung mit einer zusätzlichen Polarisationseinheit,

Fig. 7    ein Ausführungsbeispiel einer Rotationseinheit mit zwei Spiegeln und einer Planparallelplatte,

Fig. 8    den Aufbau einer Zoomeinheit mit zwei Gruppen von Zylinderlinsen,

Fig. 9    eine Illustration des optischen Wirkprinzips von anamorphotischen Prismen auf eine diskontinuierliche Strahlverteilung,

Fig. 10    den Verlauf der Strahlen dreier verschiedener Teilstrahlbündel durch das Zoomsystem in einer Ausführung mit rotationssymmetrischen Linsen in verschiedenen Konfigurationen der einzelnen Linsenpositionen,

Fig. 11    einen vereinfachten Verlauf dreier Teilstrahlbündel von der Divergenzeinheit über das erste Modul bis hinter das zweite Modul in einem Aufbau ohne Zoomsystem für eine telezentrische Ausführung des ersten und zweiten Moduls,

Fig. 12    einen vereinfachten Verlauf dreier Teilstrahlbündel von der Divergenzeinheit über das erste Modul bis hinter das zweite Modul mit einer Divergenzeinheit zwischen dem ersten und dem zweiten Modul,

Fig. 13    eine Illustration der vorzugsweisen Positionierung der Ablenkeinheit im Bereich hinter dem zweiten Modul, in dem die Teilstrahlbündel den geringsten Abstand voneinander haben,

Fig. 14    eine beispielhafte Definition der Winkel zwischen den Strahlen in einem Teilstrahlbündel bezogen auf den Hauptstrahl und Wirkung des zweiten Moduls auf die Strahlen in einem Teilstrahlbündel und auf den Winkel des Hauptstrahles relativ zur optischen Achse,

Fig. 15    eine Illustration der Wirkung des zweiten Moduls auf die Winkel der Strahlen eines Teilstrahlbündels untereinander sowie auf die Winkel zwischen den Hauptstrahlen,

Fig. 16    ein beispielhafter Scanverlauf zur Herstellung periodischer Muster mit der erfindungsgemäßen Bearbeitungsvorrichtung,

Fig. 17    Schematische Darstellung der Abbildung einer kontinuierlichen Intensitätsverteilung

Fig. 18    Schematische Darstellung der Abbildung einer diskontinuierlichen Intensitätsverteilung

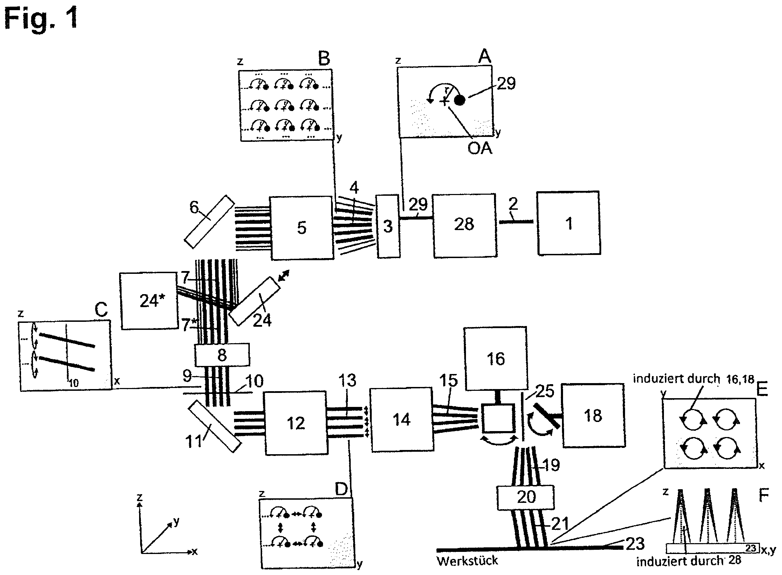

Fig. 1 zeigt eine beispielhafte Ausführung einer erfindungsgemäßen Bearbeitungsvorrichtung zur Laserbearbeitung einer Oberfläche 23. Die Bearbeitungsvorrichtung weist hier ein Lasersystem 1 auf, das ein kollimiertes Laserstrahlbündel 2 emittiert. Der Laser kann dabei je nach Anwendungsbereich beispielsweise ein ungepulster (cw-Laser), ein kurzgepulster, beispielsweise ein Nanosekundenlaser, oder vorzugsweise ein ultrakurzgepulster Laser, beispielsweise ein Pikosekundenlaser und/oder ein Femtosekundenlaser sein, der Licht hoher Kohärenz emittiert. Die Wellenlänge des Lasers kann beispielsweise im infraroten Bereich, z.B. bei 1.064 nm oder 1.030 nm, im sichtbaren Bereich, beispielsweise bei 532 nm oder 515 nm, oder auch im ultravioletten Bereich, beispielsweise bei 355 nm oder 348 nm, liegen. Im Folgenden soll der Durchmesser des emittierten Strahlbündels 2 mit $d_0$ bezeichnet werden.

Die beispielhafte Bearbeitungsvorrichtung der Fig. 1 weist eine in Strahlrichtung hinter dem Lasersystem angeordnete Rotationseinheit 28 auf, durch welche das Laserstrahlbündel gegenüber der optischen Achse in einer Versatzrichtung um einen Abstand größer als null parallel versetzbar ist, wobei die Versatzrichtung zeitlich um die optische Achse umläuft.

Jener Bereich zwischen dem Lasersystem 1 und der Rotationseinheit 28 wird hier als Laserstrahleingang bezeichnet, an welchem das Laserstrahlbündel in einer Strahlrichtung auf einer optischen Achse in die Rotationseinheit bzw. die Bearbeitungsvorrichtung einstrahlbar ist.

Die Rotationseinheit 28 erzeugt im ruhenden Zustand einen parallelen Strahlversatz relativ zur optischen Achse. Dabei soll der Abstand zwischen dem versetzten Strahlbündel (bzw. dessen Hauptstrahl) und der optischen Achse mit $r$ bezeichnet werden. In einem Koordinatensystem, in dem die optische Achse auf der x-Achse liegt, hat die optische Achse die Koordinaten (z=0, y=0). Das kollimierte Laserstrahlbündel habe beim Auftreffen auf die Rotationseinheit einen Durchmesser von $d_1$. Durch Rotation der Rotationseinheit 28 bewegt sich das versetzte Strahlbündel zeitlich um die optische Achse, beispielsweise auf einer Kreisbahn mit dem Radius $r$, wobei das Zentrum der Kreisbahn auf der optischen Achse liegt. Das Strahlbündel 29 verlässt die Rotationseinheit 28 kollimiert und bewegt sich also in diesem Beispiel auf einer Kreisbahn parallel zur optischen Achse, wie dies in Teilfigur A der Fig. 1 gezeigt ist, die einen Schnitt senkrecht zur optischen Achse abbildet. Die Rotationseinheit kann vorteilhaft eine rotierende Planparallelplatte der Dicke $t$ sein, die durch einen Hohlwellenmotor antreibbar ist. Eine Flächennormale relativ zur Rotationsachse ist dabei um einen Winkel $\alpha$ verkippt, der vorzugsweise ungleich 0° und ungleich 90° ist.

In diesem Beispiel legen die Plattendicke t und der Winkel $\alpha$ den Strahlversatz r des aus der Rotationseinheit 28 austretenden Strahlbündels 29 gemäß der Gleichung

$$r = t \sin(\alpha) \left( 1 - \frac{\cos(\alpha)}{\sqrt{\left(\frac{n_2}{n_1}\right)^2 - \sin^2(\alpha)}} \right)$$

fest, wobei $n_2$ der optische Brechungsindex der Platte und $n_1$ der Brechungsindex des Umgebungsmediums ist. Der Motor erlaubt eine Rotation der Planparallelplatte mit hoher Drehzahl im Bereich von beispielsweise 50-100 Hz oder höher.

Alternativ kann der Strahlversatz beispielsweise auch durch eine Kombination von zumindest zwei synchron rotierenden und in ihrer Lage zueinander justierbaren Keilplatten (anamorphotischen Prismen) realisiert werden. Weitere Möglichkeiten zur Induzierung des rotierenden optischen Strahlversatzes sind beispielsweise die Verwendung eines rotierenden Schmidt-Pechan-Prismas, eines rotierenden K-Spiegels oder eines rotierenden Dove-Prismas. Es ist auch möglich, den Radius r um den das Laserstrahlbündel 29 gegenüber der optischen Achse versetzt ist, variabel zu realisieren. Dies ist mit komplexeren Aufbauten möglich.

Die Bearbeitungsvorrichtung der Fig. 1 weist außerdem eine in Strahlrichtung hinter der Rotationseinheit angeordnete Divergenzeinheit 3 auf, mit welcher das Laserstrahlbündel in eine Mehrzahl von Teilstrahlbündel 4 auffächerbar ist, die in Richtung radial zur optischen Achse eine kontinuierliche oder diskrete Intensitätsverteilung haben können.

Durch die Divergenzeinheit kann der Hauptstrahl in eine endliche oder unendliche Anzahl von neuen Hauptstrahlen aufgeteilt werden, die sich jeweils in ihrer Richtung relativ zur optischen Achse unterscheiden. Zu jedem neuen Hauptstrahl gibt es eine Menge von Strahlen, die, bezogen auf den neuen Hauptstrahl, die gleiche Winkelverteilung aufweist, wie die des in die Divergenzeinheit einfallenden Laserstrahlbündels. Ein neuer Hauptstrahl bildet zusammen mit dieser Menge von Strahlen ein Teilstrahlbündel. Die Divergenzeinheit führt damit zu einer Änderung der Intensitätsverteilung des einfallenden Laserstrahlbündels im Winkelraum.

Beispiel 1: Kontinuierliche Intensitätsverteilung

Eine kontinuierliche Intensitätsverteilung ist vorteilhaft eine in sich zusammenhängende Intensitätsverteilung, die durch die Divergenzeinheit gebildet wird. Durch das erste Modul kann jedes Teilstrahlbündel im Sinne der paraxialen geometrischen Optik in einen Punkt auf einer gemeinsamen Fokusebene mit Ausrichtung senkrecht zur optischen Achse fokussiert werden. Im kontinuierlichen Fall gibt es vorteilhaft in der Fokusebene unendlich viele Punkte und somit unendlich viele Teilstrahlbündel. Als Beispiel dazu kann die Erzeugung des Buchstabens "F" genannt werden. Die zusammenhängende Intensitätsverteilung des "F" wird durch die Divergenzeinheit gebildet. Durch die Fokussierung mit dem ersten Modul wird in der Fokusebene des ersten Moduls eine Intensitätsverteilung mit der Form des Buchstaben "F" erzeugt. Jeder Punkt in der Intensitätsverteilung wird durch ein einzelnes Teilstrahlbündel geformt.

Beispiel 2: Diskontinuierliche Intensitätsverteilung

Ein Beispiel für eine diskontinuierliche Intensitätsverteilung ist ein Strahlteiler (z.B. eine Aufteilung in ein Raster aus 4 mal 4 Teilstrahlbündeln), der das Laserstrahlbündel in eine endliche Anzahl von Teilstrahlbündeln aufteilt. In der Fokusebene des ersten Moduls entstehen durch die Fokussierung in einem Bild der paraxialen Optik somit örtlich separierte Fokuspunkte. In einem Bild der beugungsbegrenzten Optik entstehen in der Fokusebene Fokusbereiche.

Beispiel 3: Kombination zwischen diskontinuierlich und kontinuierlich

Eine Kombination aus kontinuierlicher Intensitätsverteilung und diskontinuierlicher Intensitätsverteilung durch die Divergenzeinheit kann auch erfolgen. Als Beispiel dafür kann die Bildung eines Raster aus 4 mal 4 Bereichen genannt werden, die jeweils ein "F" bilden.
Die Divergenzeinheit 3 kann beispielsweise ein Strahlteiler 3 sein. Der versetzte Laserstrahlbündel 29 trifft nach der Rotationseinheit 28 auf einen oder mehrere dieser Divergenzeinheiten, die er durchläuft oder an denen er reflektiert wird. Optional können der oder die Divergenzeinheiten 3 drehbar gelagert sein, vorzugsweise in drei Dimensionen. Die Divergenzeinheit kann beispielsweise ein diffraktives optisches Element mit einem Muster von Mikrostrukturen sein.
Die Divergenzeinheit 3 teilt das Laserstrahlbündel 29 in ein Gesamtstrahlenbündel 4 aus Teilstrahlbündeln. Die Verteilung dieser Teilstrahlbündel wird durch den Aufbau der Divergenzeinheit 3 bestimmt. Alternativ kann die Divergenzeinheit auch eine beliebige Intensitätsverteilung erzeugen.
Im einfachsten Fall kann der Strahlteiler das Strahlbündel nach der Gittergleichung

$$\sin(\theta_n) = n \cdot \frac{\lambda}{g}$$

teilen, wobei $n$ die ganzzahlige Ordnung des Gitters, $\lambda$ die Wellenlänge des Laserstrahlbündels, $g$ die Gitterkonstante und $\Theta_n$ den Winkel des Teilstrahlbündels zur optischen Achse beschreiben.
Je nach Aufbau des Strahlteilers sind zweidimensionale Raster der Intensitätsverteilung oder komplexe Intensitätsverteilungen herstellbar.
Bevorzugterweise ist der Strahlteiler ein diffraktives optisches Element (DOE), das eine zweidimensionale Strahlverteilung nach den zwei Gittergleichungen

$$\sin(\theta_{xn}) = n \cdot \frac{\lambda}{g_x}$$

und

$$\sin(\theta_{ym}) = m \cdot \frac{\lambda}{g_y}$$

mit $n$ und $m$ ganzzahlig und

$$|n| \le N, \qquad |m| \le M$$

erzeugt. Die Laserleistung wird vorzugsweise auf die Teilstrahlbündel nahezu homogen verteilt, so dass

$$P_n = P_o/(4NM)\eta + \delta P_n$$

gilt, wobei $P_n$ die Leistung des Teilstrahlbündels $n$, $\eta$ die Effizienz des Strahlteilers $P_0$ die Leistung des eingehenden Laserstrahlbündels 29, $N$ und $M$ die höchsten Ordnungen des Strahlteilers und $\delta p_n$ individuelle Schwankungen der Leistung der Teilstrahlbündel aufgrund von produktionsbedingten Inhomogenitäten des Strahlteilers beschreibt. Die Differenz der Leistung $P_{max}$ des Teilstrahlbündels mit der höchsten Leistung und der Leistung $P_{min}$ des Teilstrahlbündels mit der niedrigsten Leistung,

$$U = P_{max} - P_{min} = \delta P_{max} - \delta P_{min}$$

ist maßgeblich für die Qualität des Strahlteilers.
Die sogenannte Uniformität, definiert als

$$2 P_{max} - \frac{P_{min}}{P_{min} + P_{max}}$$

gibt die maximale relative Abweichung der Laserleistung der Teilstrahlbündel an.
Neben den gewünschten Teilstrahlbündeln können bei einem Strahlteiler 3 auch unerwünschte höhere Beugungsordnungen auftreten. Diese können ebenfalls Teil des Gesamtstrahlenbündels 4 sein.
Das Gesamtstrahlenbündel 4 aus kollimierten Teilstrahlbündeln oder die durch den Strahlteiler eingestellte Intensitätsverteilung führt durch die Rotation des Laserstrahlbündels 29 ebenfalls eine Rotationsbewegung aus, wie dies in Teilfigur B gezeigt ist, das eine Ebene senkrecht zur optischen Achse abbildet. Diese Rotationsbewegung kann in diesem Beispiel im Weiteren optischen Strahlverlauf übertragen.
Die in Fig. 1 gezeigte Bearbeitungsvorrichtung weist in Strahlrichtung hinter der Divergenzeinheit 3 ein erstes Modul 5, das als Relaismodul 5 bezeichnet werden kann, auf, mit dem die Mehrzahl an Teilstrahlbündel 4 zueinander in ein zur Strahlrichtung parallel verlaufendes Gesamtstrahlenbündel parallelisierbar ist. Es wird hierbei als Gesamtstrahlenbündel die Gesamtheit der das Modul 5 verlassenden Teilstrahlbündel bezeichnet. Die Strahlrichtungen dieser Teilstrahlbündel liegen hinter dem ersten Modul 5 parallel zueinander.

Das Relaismodul 5 kann außerdem eine Fokussierung der Teilstrahlbündel bewirken, so dass jedes Teilstrahlbündel in einer Ebene 10 fokussiert wird, wobei die Ebene 10 vorzugweise für alle Teilstrahlbündel die gleiche ist und senkrecht zur optischen Achse steht.

Die in Fig. 1 gezeigte Bearbeitungsvorrichtung weist in Strahlrichtung hinter dem ersten Modul 5 einen Strahlumlenker 6 auf, der hier ein einfacher Spiegel sein kann. Der Strahlumlenker 6 ist mit seiner Flächennormalen in einem Winkel von 45° zur optischen Achse angeordnet und bewirkt daher eine Ablenkung der Teilstrahlbündel um einen Winkel von 90°. Es soll hier stets angenommen werden, dass durch einen solchen Strahlumlenker auch die optische Achse und die Strahlrichtung um den entsprechenden Winkel abgelenkt wird, so dass die optische Achse im gezeigten Beispiel hinter dem Strahlumlenker 6 in einem Winkel von 90° zur optischen Achse vor dem Strahlumlenker 6 steht.

Die in Fig. 1 gezeigte Bearbeitungsvorrichtung weist in Strahlrichtung hinter dem Strahlumlenker 6 eine Selektionseinheit auf, die zum einen einen Spiegel 24 aufweist und zum anderen eine Maske 8. Durch die Selektionseinheit ist ein Teil der Teilstrahlbündel des Gesamtstrahlenbündels entfernbar. Im gezeigten Beispiel ist der Spiegel 24 so orientiert, dass er einen Teil der entlang der Strahlrichtung einfallenden Teilstrahlbündel in einen Absorber 24* reflektiert. Der Spiegel 24 ist hier beweglich ausgestaltet und dadurch in den Strahlengang einiger Teilstrahlbündel einfahrbar.

Die restlichen Teilstrahlbündel 7* des Gesamtstrahlenbündels treffen dann auf die Maske 8, die aus dem verbleibenden Gesamtstrahlenbündel 7* weitere Teilstrahlbündel entfernt. Beispielsweise können mit der Maske 8 nullte und höhere Beugungsordnungen aus dem Gesamtstrahlenbündel 7* entfernt werden, wenn die Divergenzeinheit 3 auf einem Gitter basiert.

Beispielsweise kann die Maske 8 ein Metallblech, ein beschichtetes transparentes Substrat, bei dem eine nicht transparente Beschichtung geeignete Öffnungen aufweist, oder ein Spiegel mit einem definierten Raster aus Bohrungen sein, welche die gewünschten Hauptordnungen unbeeinflusst propagieren lassen. Die zu selektierenden nullten und höheren Ordnungen können durch die Maske 8 absorbiert werden oder in einen Absorber, beispielsweise den Strahlabsorber 24*, umgelenkt werden.

Die Selektionseinheit ist im gezeigten Beispiel in einem Bereich entlang der optischen Achse angeordnet, in dem sich die Teilstrahlbündel des Gesamtstrahlenbündels nicht überlappen. Dies kann insbesondere dadurch erzielt werden, dass das erste Modul 5 die Teilstrahlbündel jeweils auf die Ebene 10 fokussiert. Dadurch überlappen sich die Teilstrahlbündel in einem Bereich vor und hinter der Ebene 10 nicht. Entsprechend kann in diesem Bereich die Selektionseinheit mit dem Spiegel 24 und der Maske 8 angeordnet sein.

Teilfigur C in Fig. 1 zeigt, dass auch die Drehung der einzelnen Teilstrahlbündel in die Ebene 10 übertragen wird.

In Strahlrichtung hinter der Maske 8 und der Ebene 10 ist ein weiterer Strahlumlenker 11 angeordnet, der wiederum mit seiner Flächennormalen in einem Winkel von 45° zur optischen Achse steht und damit die Teilstrahlbündel wie auch die optische Achse und die Strahlrichtung um 90° ablenkt.

In Strahlrichtung hinter dem Strahlumlenker 11 weist die in Fig. 1 gezeigte Bearbeitungsvorrichtung ein optionales Zoomsystem 12 auf, mit welchem der Abstand zwischen den Teilstrahlbündel des Gesamtstrahlenbündes veränderbar ist. Das Zoomsystem 12 skaliert also das Gesamtstrahlenbündel 9 der durch die Maske 8 durchtretenden Teilstrahlbündel durch eine feste, diskrete oder kontinuierliche Einstellung und ermöglicht damit eine Änderung der Spotabstände, im Falle einer beliebigen Intensitätsverteilung einer Skalierung dieser Intensitätsverteilung. Das Zoomsystem kann beispielsweise auswechselbare Festbrennweiten-Objektive, bewegte Linsen mit diskreten oder kontinuierlichen Positionen oder aktive Elemente wie beispielsweise Flüssigkeitslinsen aufweisen und bevorzugt motorisiert sein.

Die Wirkung einer veränderbaren Skalierung ist in Teilfigur B der Fig. 1 gezeigt. Es deuten hier Doppelpfeile an, dass der Abstand zwischen den rotierenden Strahlen veränderbar ist.

Es sei darauf hingewiesen, dass das Zoomsystem alternativ an einer beliebigen Position zwischen der Divergenzeinheit 3 und der Fokussiereinheit 20 positioniert sein kann oder auch integraler Bestandteil einer der Vorrichtungen und Linsengruppen in diesem Bereich sein kann.

Die Bearbeitungsvorrichtung der Fig. 1 weist in Strahlrichtung hinter dem Zoomsystem 12 ein weiteres Modul 14 auf, das als zweites Relaismodul 14 bezeichnet werden kann. Mit diesem zweiten Modul sind die Teilstrahlbündel 9, die aus dem Zoomsystem 12 mit parallelen Richtungen austreten, konvergierbar, so dass sie in einer Strahlebene 25 einen minimalen Abstand zueinander haben. Werden die Teilstrahlbündel jeweils durch das erste Modul 5 auf die Ebene 10 fokussiert, so können sie jeweils divergent auf das zweite Relaismodul 14 treffen. Dies ist dann vorteilhaft, wenn das Modul 14 die Teilstrahlbündel jeweils kollimiert.

Das zweite Modul 14 kann in seiner Orientierung bezüglich der optischen Achse genau umgekehrt zum ersten Modul 5 angeordnet sein, so dass beide zusammen den Strahlteiler 3 in die Strahlebene 25 abbilden.

In der Strahlebene 25 können sich die Strahlachsen der Teilstrahlbündel des aus dem zweiten Modul 14 austretenden Gesamtstrahlbündels 15 kreuzen.

Die Bearbeitungsvorrichtung der Fig. 1 weist außerdem eine in Strahlrichtung hinter dem zweiten Modul angeordnete Umlenkeinheit auf, die hier die Strahlumlenker 16 und 18 aufweist. Vorzugsweise ist die Umlenkeinheit so angeordnet, dass der effektive Punkt, um den die Strahlen abgelenkt werden, in der Strahlebene 25 liegt. Die Strahlumlenker 16 und 18 erlauben eine einstellbare Ablenkung des Laserstrahls mit hoher Dynamik in der Bearbeitungsebene des Werkstücks 23. Die Strahlumlenker sind hier senkrecht zueinander angeordnet, so dass sie eine Strahlumlenkung in zwei Raumrichtungen ermöglichen. Bevorzugterweise kann der Strahlablenker hier ein Galvanometerscanner sein. Alternativ können andere dynamische Strahlablenker wie Polygonscanner, Resonanzscanner, Piezoscanner, MEM-Spiegel, akusto- oder elektrooptische Deflektoren eingesetzt werden.

Die in Fig. 1 gezeigte Bearbeitungsvorrichtung weist in Strahlrichtung hinter der Strahlumlenkeinheit eine Fokussiereinheit 20 auf, mit der die verbleibenden Teilstrahlbündel 19 des Gesamtstrahlbündel s zueinander parallelisierbar sind. Sofern das zweite Modul 14 die Teilstrahlbündel jeweils kollimiert, kann die Fokussiereinheit 20 die Teilstrahlbündel außerdem jeweils in die zu bearbeitende Ebene 23 fokussieren, so dass die Fokussiereinheit eine Fokussieroptik 20 ist. Die Fokussieroptik kann beispielsweise eine F-Theta-korrigierte Linse mit telezentrischen Eigenschaften sein. Zusammen mit den Strahlumlenkern 16 und 18 lassen sich dann die entstehenden Foki auf beliebigen zweidimensionalen Bahnen auf dem Werkstück 23 ablenken. Der durch die Rotationseinheit 28 bedingte rotierende Strahlversatz führt in der Strahlebene 25 zu einer Bewegung der Teilstrahlbündel auf einer Kreisbahn mit dem Radius r'. Der Strahlversatz führt zu einer Anstellung des Laserstrahls relativ zur optischen Achse der Fokussieroptik, so dass das Laserstrahlbündel in einem Winkel β relativ zur optischen Achse auf das Werkstück trifft, wie dies in Teilfigur F der Fig. 1 gezeigt ist.

Das fokussierte und eingestellte Gesamtstrahlenbündel 21 bildet auf dem Werkstück 23 eine durch den Strahlteiler und die restliche Bearbeitungsoptik bestimmte Intensitätsverteilung. Im beispielhaften Falle des zweidimensionalen Gitters kann in der Bearbeitungsebene 23 ein Raster aus Foki in Form von Gitterpunkten mit äquidistanten Gitterpunktabständen in der jeweiligen Raumrichtung entstehen. Die Skalierung des Gesamtstrahlenbündels 13 durch die Zoomeinheit 12 erlaubt eine Änderung der Gitterpunktabstände in der Bearbeitungsebene 23 mit hoher Genauigkeit.

Optional ist zwischen der Fokussiereinheit 20 und dem Werkstück 23 eine Prozessgasdüse eingebracht, die einen Gasstrahl auf die Bearbeitungspunkte lenkt und zu einer gezielten Abführung von flüssigem oder gasförmigem Material führen kann. Die Prozessgasdüse kann dabei so ausgeführt sein, dass sie mehrere Teildüsen aufweist, die jeweils den Arbeitsbereich eines Teilstrahls abdecken.

Zusammenfassend kann also das Beispiel der Fig. 1 wie folgt realisiert sein.

Ein kollimiertes Laserstrahlbündel 2 wird aus dem Lasersystem 1 emittiert und trifft im Anschluss auf eine Rotationseinheit 28, die einen Strahlversatz r induziert so dass das Laserstrahlbündel eine Kreisbahn um die optische Systemachse beschreibt (vgl. Fig. 1 - Bild A). Im Anschluss durchläuft das kollimierte Laserstrahlbündel ein diffraktiv optisches Element (DOE). Der Strahlteiler teilt das Laserstrahlbündel 29 in ein Bündel 4 aus beispielsweise n x n (z.B. n=14) jeweils kollimierten Teilstrahlbündeln. Die Drehung des diffraktiv optischen Elements relativ zur optischen Achse ist dabei vorzugsweise so eingestellt, dass die Kanten des Rechteckes, welches die Strahlverteilung des DOE umfasst jeweils parallel zu einer der Scannerachsen der Strahlumlenkeinheiten 16 oder 18 ausgerichtet sind. Das Bündel 4 trifft auf ein Relaymodul 5, das den Strahl auf der Ebene 10 fokussiert. Nach der Umlenkung des Strahls durch einen Strahlumlenker 6 durchläuft das fokussierte Gesamtstrahlenbündel 7 einen Bereich, in dem die Teilstrahlbündel räumlich separiert sind. Das Strahlselektionsmodul weist dabei vorzugsweise zwei verfahrbaren Achsen und einem rechteckigen Spiegel der durch Bewegung der Achsen Teilbereiche des Gesamtstrahlenbündels 7 in den Strahlabsorber 24* umlenkt. Das Strahlbündel 7* trifft hinter dem Strahlselektionsmodul 24 auf eine Maske 8. Die Maske 8 selektiert aus dem Gesamtstrahlenbündel 7* weitere Teilstrahlbündel und filtert somit beispielsweise für den Prozess unerwünschte höhere Ordnungen. Hinter der Maske 8 tritt das bereinigte Gesamtstrahlenbündel 9 aus, dessen Teilstrahlbündel durch die Fokussierung im Relaymodul 5 in der Strahlebene 10 fokussiert werden. Nach der Umlenkung durch den Strahlumlenker 11 wird das Strahlbündel 9 in das Zoomsystem 12 eingekoppelt. Das Zoomsystem 12 skaliert das Gesamtstrahlenbündel 9 mit dem Ziel die Abstände der einzelnen Teilstrahlbündel auf dem Werkstück 23 räumlich zu manipulieren. Nach der Skalierung durch das Zoom-Linsensystem 12 tritt das Gesamtstrahlenbündel 13 in das zweite Relaymodul 14 ein, sodass eine skalierte Abbildung des Strahlteilers 3 in der effektiven Drehachse 25 des dynamischen Strahlumlenkers bestehend aus den Elementen 16 und 18 erfolgt. Das durch die Strahlumlenker 16 und 18 umgelenkte Gesamtstrahlenbündel 19 wird durch die Fokussieroptik 20 auf das Werkstück 23 fokussiert. Das fokussierte Gesamtstrahlenbündel 21 bildet auf dem Werkstück 23 eine durch den Strahlteiler und die restliche Bearbeitungsoptik determinierte Intensitätsverteilung. Die Rotation des kompletten Teilstrahlbündels auf dem Werkstück 23 (x,y Ebene) wird dabei über die Rotation des Strahlteilers 3 um die Achse der Strahlausbreitungsrichtung (optische Achse) manipuliert. Die Anstellung des Laserstrahls relativ zur optischen Achse der Fokussiereinheit erfolgt durch den Strahlversatz r der Rotationseinheit 28. Vorzugsweise werden die dynamischen Strahlumlenker 16 und 18 so bewegt, dass eine Kreisbahn mit fester Rotationsfrequenz auf dem Werkstück 23 abgefahren wird (vgl. Fig. 1- Bild E). Diese Kreisbahn wird dabei von jedem Teilstrahl durchgeführt. Die Rotationseinheit 28 wird dabei vorzugsweise synchron mit den Strahlumlenkern 16 und 18 so bewegt, dass die Rotationsfrequenz der Rotationseinheit 28 und der Kreisbahn übereinstimmen. Dies führt dazu, dass das Laserstrahlbündel mit jeder Tangente der Kreisbahn einen konstanten Anstellwinkel bildet.

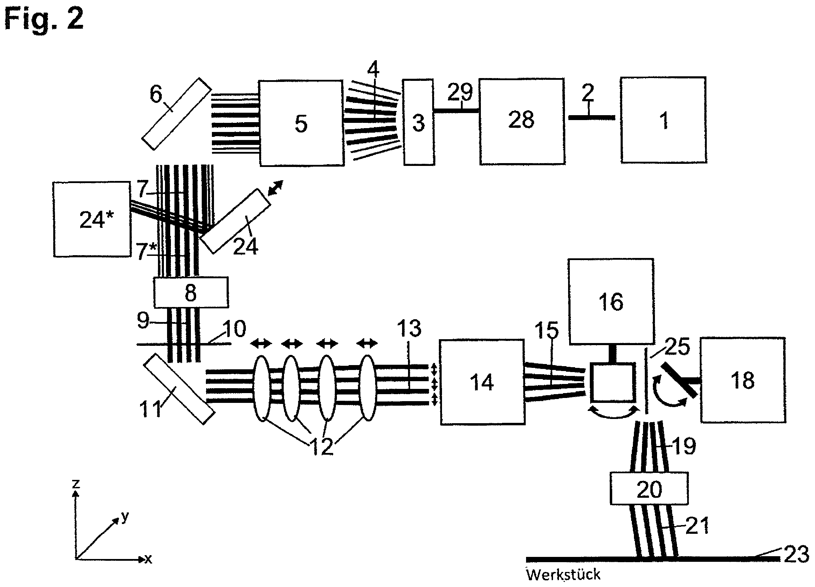

Fig. 2 zeigt eine weitere beispielhafte Ausführung einer erfindungsgemäßen Bearbeitungsvorrichtung zur Laserbearbeitung einer Oberfläche 23.

Die gezeigten Bestandteile stimmen mit jenen in Fig. 1 gezeigten und beschriebenen überein. In Fig. 2 ist das Zoomsystem 12 beispielhaft mittels 4 rotationssymmetrischen Linsen realisiert, die entlang der optischen Achse gegeneinander verschiebbar sind.

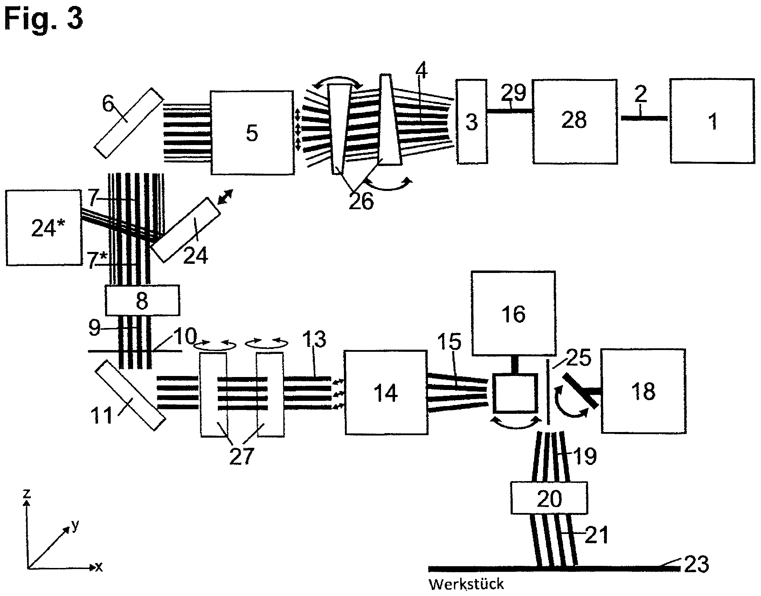

Ein kollimiertes Laserstrahlbündel 2 wird aus dem Lasersystem 1 emittiert und trifft im Anschluss auf eine Rotationseinheit 28, die einen Strahlversatz r induziert sodass das Laserstrahlbündel eine Kreisbahn um die optische Systemachse beschreibt. Im Anschluss durchläuft das kollimierte Laserstrahlbündel einen Strahlteiler 3. Der Strahlteiler teilt das Laserstrahlbündel 29 in ein Bündel 4 aus jeweils kollimierten Teilstrahlbündeln. Das Bündel 4 trifft auf ein Relaymodul 5, das den Strahl auf der Ebene 10 fokussiert. Nach der Umlenkung des Strahlbündels durch einen Strahlumlenker 6 durchläuft das fokussierte Gesamtstrahlenbündel 7 einen Bereich in dem die Teilstrahlbündel räumlich separiert sind. Dabei werden mittels dynamisch positionierbarem Strahlselektionsmodul 24 ausgewählte Strahlen gefiltert und auf einen Strahlabsorber 24* umgelenkt. Das Strahlbündel 7* trifft hinter dem Strahlselektionsmodul 24 auf eine Maske 8. Die Maske 8 selektiert aus dem Gesamtstrahlenbündel 7* weitere Teilstrahlbündel und filtert somit beispielsweise für den Prozess unerwünschte höhere Ordnungen. Hinter der Maske 8 tritt das bereinigte Gesamtstrahlenbündel 9 aus, dessen Teilstrahlbündel durch die Fokussierung im Relaymodul 5 in der Strahlebene 10 fokussiert werden. Nach der Umlenkung durch den Strahlumlenker 11 wird das Strahlbündel 9 in ein 4-Linsen-Zoomsystem 12 eingekoppelt. Das Zoomsystem 12 beeinflusst die räumliche Winkelverteilung der Einzelstrahlen und skaliert damit das Gesamtstrahlenbündel 9 zu Gesamtstrahlenbündel 13 mit dem Ziel die Abstände der einzelnen Teilstrahlbündel auf dem Werkstück 23 räumlich zu manipulieren. Dabei werden im Zoom 12 definierte Linsen dynamisch auf modellbasiert vordefinierte Positionen bewegt, um die notwendige Vergrößerung zu erzielen. Nach der Skalierung durch das Zoom-Linsensystem 12 tritt das skalierte Gesamtstrahlenbündel 13 in das zweite Relaymodul 14 ein, sodass eine skalierte Abbildung des Strahlteilers 3 in der effektiven Drehachse 25 des dynamischen Strahlumlenkers bestehend aus den Elementen 16 und 18 erfolgt. Das durch die Strahlumlenker 16 und 18 umgelenkte Gesamtstrahlenbündel 19 wird durch die Fokussieroptik 20 auf das Werkstück 23 fokussiert. Das fokussierte Gesamtstrahlenbündel 21 bildet auf dem Werkstück 23 eine durch den Strahlteiler und die restliche Bearbeitungsoptik determinierte Intensitätsverteilung Fig. 3 zeigt eine weitere beispielhafte Ausgestaltung einer erfindungsgemäßen Bearbeitungsvorrichtung. Wiederum entsprechen die gezeigten Elemente jenen in Fig. 1 gezeigten, so dass die dort gemachten Ausführungen auch hier übertragbar sind. Es ist in Fig. 3 jedoch das Zoomsystem mittels zweier anamorphotischer Prismenpaare 26 und 27, also mit Keilplattenpaaren 26 und 27, realisiert.

Ein kollimiertes Laserstrahlbündel 2 wird aus dem Lasersystem 1 emittiert und trifft im Anschluss auf eine Rotationseinheit 28, die einen Strahlversatz r induziert sodass das Laserstrahlbündel eine Kreisbahn beschreibt. Im Anschluss durchläuft das kollimierte Laserstrahlbündel einen Strahlteiler 3. Der Strahlteiler teilt das Laserstrahlbündel 29 in ein Bündel 4 aus jeweils kollimierten Teilstrahlbündeln. Das Bündel 4 trifft auf ein anamorphotisches Prismenpaar 26, welches als Zoom-System dient. Über eine relative Rotation der Prismen 26 zueinander kann die Winkelverteilung in einer Achse manipuliert und damit eine Änderung der Strahlseparation auf dem Werkstück 23 in der betroffenen Achse erreicht werden. Das manipulierte Bündel trifft auf das Relaymodul 5, das den Strahl auf der Ebene 10 fokussiert. Nach der Umlenkung des Strahlbündels durch einen Strahlumlenker 6 durchläuft das fokussierte Gesamtstrahlenbündel 7 einen Bereich in dem die Teilstrahlbündel räumlich separiert sind. Dabei werden mittels dynamisch positionierbarem Strahlselektionsmodul 24 ausgewählte Strahlbündel gefiltert und auf einen Strahlabsorber 24* umgelenkt. Das Strahlbündel 7* trifft hinter dem Strahlselektionsmodul 24 auf eine Maske 8. Die Maske 8 selektiert aus dem Gesamtstrahlenbündel 7* weitere Teilstrahlbündel und filtert somit beispielsweise für den Prozess unerwünschte höhere Ordnungen. Hinter der Maske 8 tritt das bereinigte Gesamtstrahlenbündel 9 aus, dessen Teilstrahlbündel durch die Fokussierung im Relaymodul 5 in der Strahlebene 10 fokussiert werden. Nach der Umlenkung durch den Strahlumlenker 11 wird das Strahlbündel 9 in ein zweites anamorphotisches Prismenpaar 27 eingekoppelt, welches senkrecht zum ersten Prismenpaar 26 angeordnet ist und damit die zweite räumliche Achse der Strahlabstände auf dem Werkstück 23 manipuliert. Nach der Skalierung durch das Prismen-Zoom-System 27 tritt das Gesamtstrahlenbündel 13 in das zweite Relaymodul 14 ein, so dass eine skalierte Abbildung des Strahlteilers 3 in der effektiven Drehachse 25 des dynamischen Strahlumlenkers bestehend aus den Elementen 16 und 18 erfolgt. Das durch die Strahlumlenker 16 und 18 umgelenkte Gesamtstrahlenbündel 19 wird durch die Fokussieroptik 20 auf das Werkstück 23 fokussiert. Das fokussierte Gesamtstrahlenbündel 21 bildet auf dem Werkstück 23 eine durch den Strahlteiler und die restliche Bearbeitungsoptik determinierte Intensitätsverteilung. Die Rotation der Teilstrahlbündel in der Bearbeitungsebene auf dem Werkstück 23 wird dabei über die Rotation des Strahlteilers 3 orthogonal zur Strahlausbreitungsrichtung manipuliert.

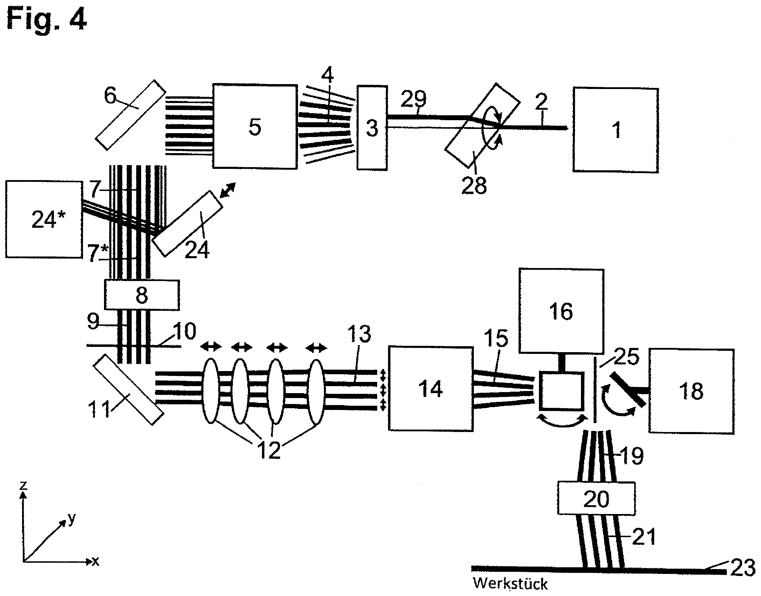

Fig. 4 zeigt ein weiteres Ausführungsbeispiel einer erfindungsgemäßen Bearbeitungsvorrichtung. Die gezeigten Elemente entsprechen im Wesentlichen jenen in Fig. 1 gezeigten. Die Beschreibung zu Fig. 1 kann daher auf Fig. 4 übertragen werden. In Fig. 4 ist die Rotationseinheit 28 als gekippte Planparallelplatte ausgestaltet und die Zoomvorrichtung 12 mittels vier entlang der optischen Achse gegeneinander verschiebbaren Linsen. Durch Brechung an der angestellten Planparallelplatte wird gemäß dem Brechungsgesetzt ein Strahlversatz induziert. Das Strahlbündel 29 verlässt die Platte parallel und kollimiert zur optischen Achse. Die Rotation der Planparallelplatte führt dazu, dass das versetzte Strahlbündel um die optische Achse rotiert und somit eine Kreisbewegung ausführt. Alternativ kann der Anstellwinkel der Planparallelplatte relativ zur optischen Achse auch null sein. In diesem Fall wäre jedoch der Versatz Null.

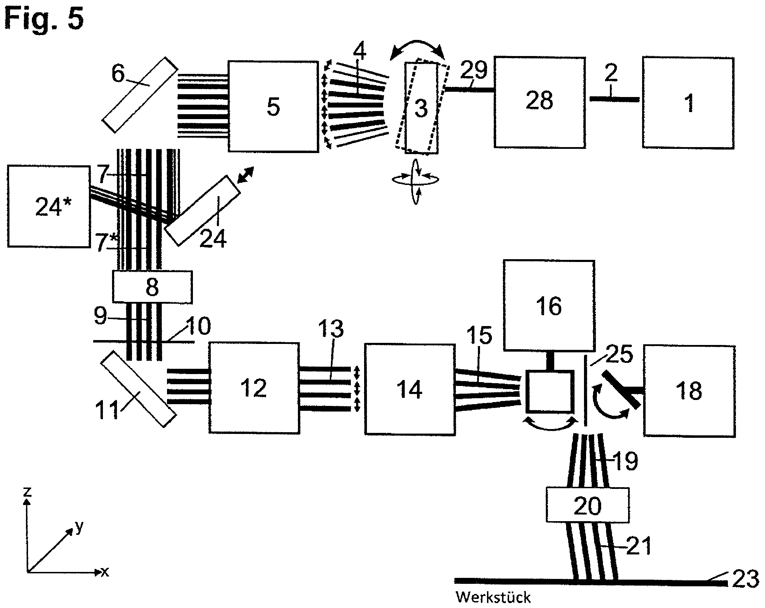

Fig. 5 zeigt eine weitere beispielhafte Ausgestaltung der erfindungsgemäßen Bearbeitungsvorrichtung. Dabei entsprechen die gezeigten Elemente jenen in Fig. 1 gezeigten, so dass die Beschreibung zu Fig. 1 auf Fig. 5 übertragbar ist. In Fig. 5 ist die Divergenzeinheit 3 relativ zur optischen Achse verkippbar. Bevorzugterweise kann sie ein diffraktives optisches Element sein. Durch Verkippung der Divergenzeinheit 3 kann die Periode der Teilstrahlbündelanordnung in der Werkstückebene 23 beeinflusst werden. Dies kann beispielsweise für eine Feineinstellung der Spotperiode im Auflösungsbereich von wenigen Mikrometern bis in den Bereich einiger Nanometer genutzt werden.

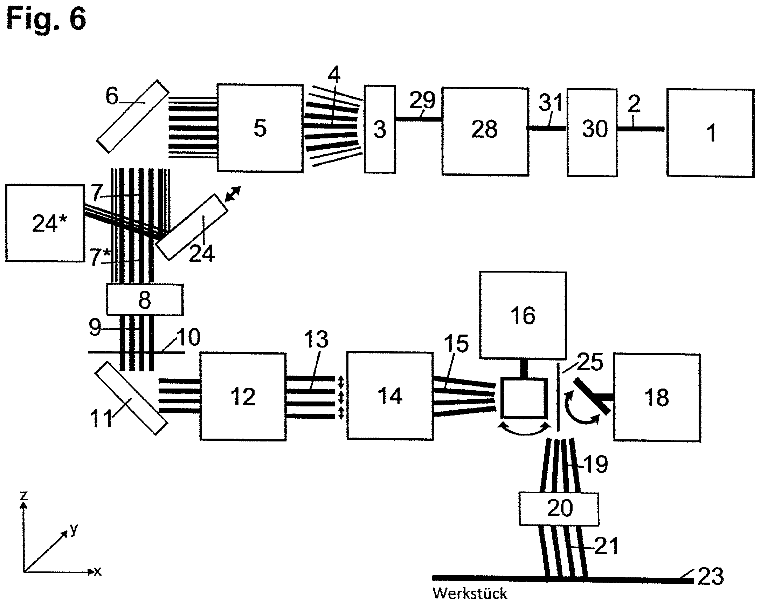

Fig. 6 zeigt ein weiteres Ausführungsbeispiel einer erfindungsgemäßen Bearbeitungsvorrichtung. Der Aufbau entspricht jenem in Fig. 1 gezeigten, so dass die Beschreibung zu Fig. 1 auf Fig. 6 übertragbar ist. Zusätzlich zur Fig. 1 weist jedoch der in Fig. 6 gezeigte Aufbau eine Lichtpolarisationseinheit 30 auf, die den Polarisationszustand des Laserstrahls räumlich dynamisch verändert. Im gezeigten Beispiel ist die Lichtpolarisationseinheit 30 zwischen dem Lasersystem 1 und der Rotationseinheit 28 angeordnet.

Ein linear polarisierter kollimierter Laserstrahlbündel 2 wird aus dem Lasersystem 1 emittiert und trifft im Anschluss auf die Lichtpolarisationseinheit 30, die den Polarisationszustand des Laserstrahls räumlich, dynamisch verändert. Die Lichtpolarisationseinheit 30 kann dabei verschiedene Ausführungen haben. Im Vorzugsfall besteht sie aus einer drehbar gelagerten Halbwellenplatte die eine Drehung der Polarisationsrichtung um die optische Achse durchführen kann. Die Halbwellenplatte kann mit hoher Frequenz um die optische Achse gedreht werden, sodass eine schnelle Drehung der Polarisationsrichtung des linear polarisierten Lasers ermöglicht wird. Vorzugsweise ist die Rotationsfrequenz der Halbwellenplatte dabei genau halb so groß wie die der Rotationseinheit 28. Das in der Polarisation modifizierte Laserstrahlbündel 31 verlässt die Polarisationseinheit 30 und trifft im Anschluss auf die Rotationseinheit 28, die einen Strahlversatz r induziert sodass das Laserstrahlbündel eine Kreisbahn beschreibt. Im Anschluss durchläuft das kollimierte Laserstrahlbündel einen Strahlteiler 3. Der Strahlteiler teilt das Laserstrahlbündel 29 in ein Bündel 4 aus jeweils kollimierten Teilstrahlen. Das Bündel 4 trifft auf ein Relaymodul 5, das den Strahl auf der Ebene 10 fokussiert. Nach der Umlenkung des Strahls durch einen Strahlumlenker 6 durchläuft das fokussierte Gesamtstrahlenbündel 7 einen Bereich in dem die Teilstrahlbündel räumlich separiert sind. Dabei werden mittels dynamisch positionierbarem Strahlselektionsmodul 24 ausgewählte Strahlen gefiltert und auf einen Strahlabsorber 24* umgelenkt. Das Strahlbündel 7* trifft hinter dem Strahlselektionsmodul 24 auf eine Maske 8. Die Maske 8 selektiert aus dem Gesamtstrahlenbündel 7* weitere Teilstrahlbündel und filtert somit beispielsweise für den Prozess unerwünschte höhere Ordnungen. Hinter der Maske 8 tritt das bereinigte Gesamtstrahlenbündel 9 aus, dessen Teilstrahlbündel durch die Fokussierung im Relaymodul 5 in der Strahlebene 10 fokussiert werden. Nach der Umlenkung durch den Strahlumlenker 11 wird das Strahlbündel 9 in das Zoomsystem 12 eingekoppelt. Das Zoomsystem 12 skaliert das Gesamtstrahlenbündel 9 mit dem Ziel die Abstände der einzelnen Teilstrahlbündel auf dem Werkstück 23 räumlich zu manipulieren. Nach der Skalierung durch das Zoom-Linsensystem 12 tritt das Gesamtstrahlenbündel 13 in das zweite Relaymodul 14 ein, so dass eine skalierte Abbildung des Strahlteilers 3 in der effektiven Drehachse 25 des dynamischen Strahlumlenkers bestehend aus den Elementen 16 und 18 erfolgt. Das durch die dynamischen Strahlumlenker 16 und 18 umgelenkte Gesamtstrahlenbündel 19 wird durch die Fokussieroptik 20 auf das Werkstück 23 fokussiert. Das fokussierte Gesamtstrahlenbündel 21 bildet auf dem Werkstück 23 eine durch den Strahlteiler und die restliche Bearbeitungsoptik determinierte Intensitätsverteilung. Die Rotation der Teilstrahlbündel auf dem Werkstück 23 wird dabei über die Rotation des Strahlteilers 3 orthogonal zur Strahlausbreitungsrichtung manipuliert. Durch die vorzugsweise synchrone Bewegung von Polarisationseinheit 30, der Rotationseinheit 28 und der dynamischen Strahlumlenker 16 und 18 wird eine definierte Ausrichtung des Polarisationsvektors zur Bewegungsrichtung und zur Anstellung des Laserstrahls erzielt.

Alternativ kann die Polarisationseinheit auch aus einer Viertelwellenplatte zur Herstellung zirkularer Polarisation oder eine Kombination aus Verzögerungsplatten zur Herstellung anderer Polarisationsarten ausgeführt sein. Hierzu zählen vorzugsweise die Herstellung von radialer Polarisation, bei der die Polarisationsvektoren radial zum Zentrum der Intensitätsverteilung des Laserstrahls ausgerichtet sind oder tangentialer Polarisation, bei der die Polarisationsvektoren tangential zum Zentrum der Intensitätsverteilung ausgerichtet sind durch Verwendung segmentierter Viertelwellen- oder Halbwellenplatten.

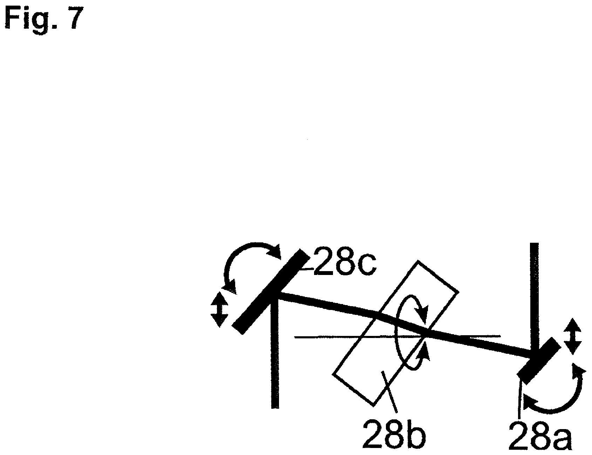

Fig. 7 zeigt eine beispielhafte Realisierung einer Rotationseinheit 28, mit welcher ein einfallendes Laserstrahlbündel 2 um einen Betrag r parallel versetzbar ist, wobei die gezeigte Ausführungsform erlaubt, den Abstand r variabel einzustellen. Der Aufbau weist einen ersten Spiegel 28a auf, der das einfallende Laserstrahlbündel 2 auf eine Planparallelplatte 28b reflektiert. Das Laserstrahlbündel durchläuft die Planparallelplatte 28b und wird dabei gegenüber seiner Einfallsrichtung parallel versetzt. Das austretende Laserstrahlbündel trifft auf einen zweiten Spiegel 28c, das so orientiert ist, dass das auslaufende Laserstrahlbündel 29 parallel zum einfallenden Laserstrahlbündel 2 verläuft, jedoch um den Betrag r versetzt. Die Planparallelplatte 28b ist rotierend ausgestaltet. Vorzugsweise rotiert dabei die Planparallelplatte 28b um eine Achse, die durch den Auftreffpunkt des Laserstrahls auf die Planparallelplatte verläuft. Durch Verfahren der beiden Spiegel 28a und 28c und Anpassen des Kippwinkels kann der Auftreffwinkel $\alpha$ des Laserstrahls auf die Planparallelplatte 28b eingestellt werden. Dabei stellt sich durch die Planparallelplatte ein wie in Fig. 1 beschrieben definierter Strahlversatz ein und damit ein Kreisbahnradius r, der durch die Änderung des Auftreffwinkels variierbar ist. Die beiden Spiegel werden dabei immer entsprechend symmetrisch so verstellt, dass der Auftreffpunkt des Laserstrahls auf die Planparallelplatte der Drehachse der Rotationseinheit entspricht und dass die Drehachse des rotierenden Strahls nach der Reflektion am zweiten Spiegel 28c für alle Winkeleinstellungen identisch ist.

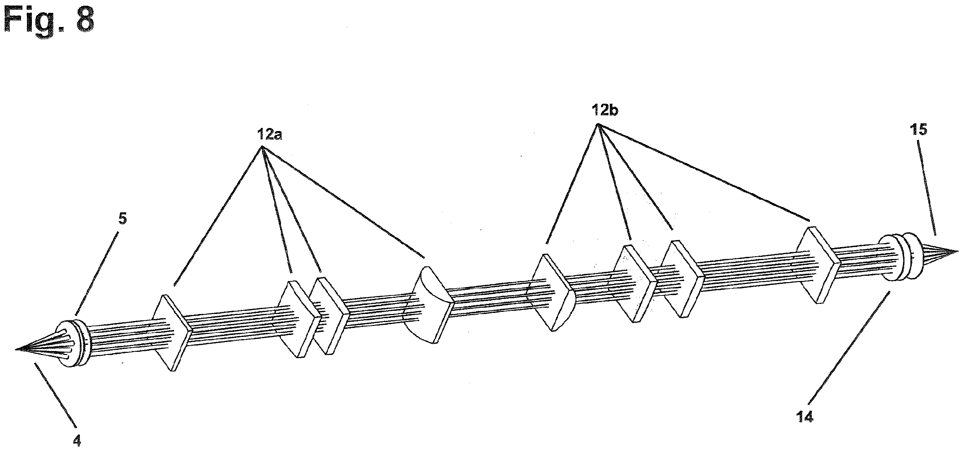

Figur 8 zeigt beispielhaft einen Aufbau einer Zoomeinheit mit einer ersten Gruppe von Zylinderlinsen 12a und einer zweiten Gruppen von Zylinderlinsen 12b, die zwischen dem ersten Modul 5 und dem zweiten Modul 14 angeordnet sind. Die Zylinderachsen der Zylinderlinsen sind in den Linsen der zweiten Gruppe 12b gegenüber den Linsen der ersten Gruppe 12a um 90° um die optische Achse gedreht. Durch die Zylinderlinsen der ersten Gruppe 12a wird der Abstand zwischen den Teilstrahlbündeln in einer ersten Richtung senkrecht zur optischen Achse skaliert und durch die Zylinderlinsen der zweiten Gruppen 12b wird ein Abstand der Teilstrahlbündel in einer zur ersten Richtung senkrechten Richtung skaliert.

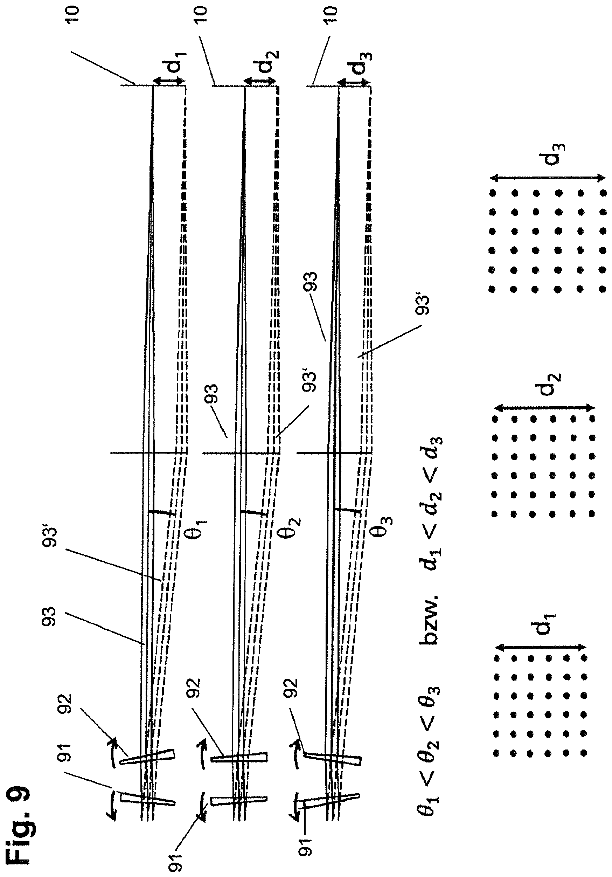

Figur 9 illustriert das optische Wirkprinzip von anamorphotischen Prismen auf eine diskontinuierliche Strahlverteilung. Durch Verkippung der Prismen 91 und 92 zueinander kann eine Skalierung der Abstände der Teilstrahlbündel 93, 93' zueinander bewirkt werden. Die Verkippung der Zylinderlinsen 91 und 92 gegeneinander erfolgt dabei um eine Kippachse, die senkrecht zur optischen Achse liegt. Die Teilstrahlbündel 93, 93' werden durch das Verkippen der Prismen 91 und 92 um Winkel abgelenkt, die in einer Ebene senkrecht zur Kippachse der Prismen 91 und 92 liegen und parallel zur optischen Achse liegen. Werden die Prismen 91 und 92 um einen bestimmten Winkel zueinander gekippt, so wird das Teilstrahlbündel 93 um einen Winkel $\Theta_1$ abgelenkt, so dass es als Teilstrahlbündel 93' verläuft. Nach Durchlaufen des ersten Moduls 5 ergibt sich in der Fokusebene 10 des ersten Moduls 5 dadurch eine Verschiebung des Teilstrahlbündels 93 um einen Abstand $d_1$. Figur 9 zeigt diese Verschiebung des Teilstrahlbündels 93 für drei verschiedene beispielhafte Stellungen der Prismen 91 und 92, die zu unterschiedlichen Winkeln $\Theta_2$ und $\Theta_3$ führen und damit zu unterschiedlichen Verschiebungen in der Fokusebene 10 um Abstände $d_2$ und $d_3$.

Im unteren Bereich der Figur 9 sind die Fokuspunkte in der Fokusebene 10. Es ist zu erkennen, dass durch die Verkippung der Prismen 91 und 92 unterschiedliche Abstände zwischen den Fokuspunkten in einer Dimension bewirkt werden.

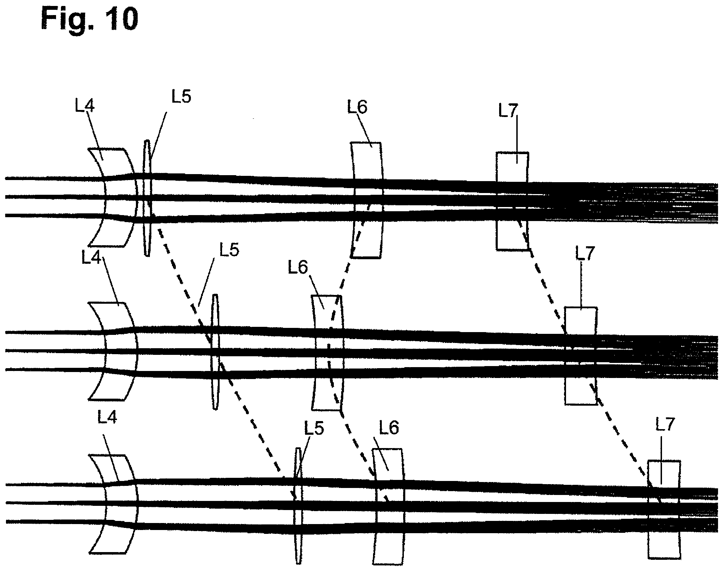

Figur 10 zeigt den Verlauf der Strahlen drei verschiedener Teilstrahlbündel durch ein Zoomsystem 12, das mit vier rotationssymmetrischen Linsen L4, L5, L6 und L7 ausgebildet ist, in verschiedenen Konfigurationen der einzelnen Linsenpositionen. Es ist zu erkennen, dass der Abstand der Teilstrahlbündeln 7a, 7b und 7c am Ausgang der vier Linsen L4, L5, L6 und L7 von der Positionierung dieser Linsen zueinander abhängig ist. In der oberen Teilfigur der Figur 10 haben die Teilstrahlbündel 7a, 7b und 7c am Ausgang den geringsten Abstand zueinander. In der untersten Teilfigur haben sie den größten Abstand zueinander.

In Figur 10 sind die Teilstrahlbündel 7a, 7b und 7c als Bündel einer Vielzahl von Strahlen dargestellt. Einer dieser Strahlen kann als Hauptstrahl angesehen werden. Das Zoomsystem skaliert dann die Abstände der Hauptstrahlen zueinander.

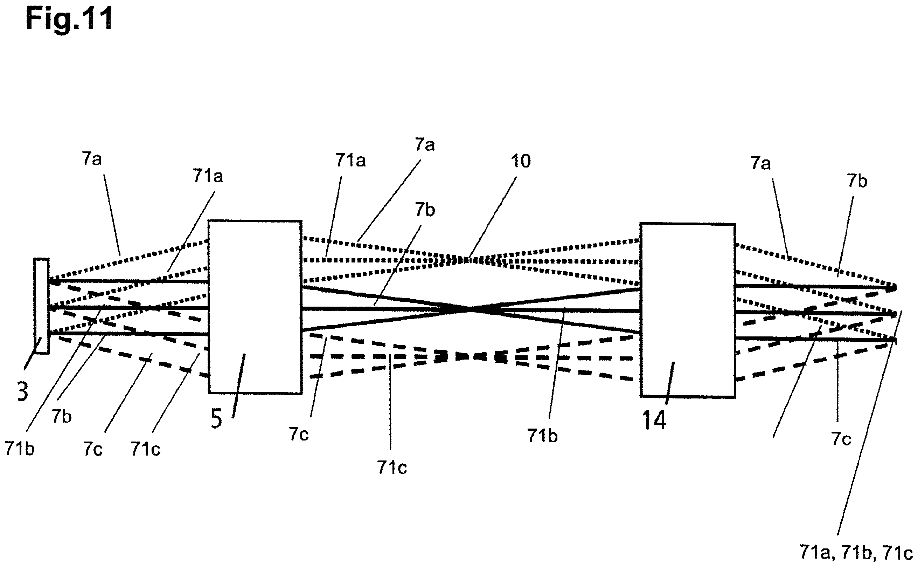

Figur 11 zeigt vereinfacht den Strahlverlauf drei verschiedener Teilstrahlbündel von der Divergenzeinheit 3 über das erste Modul 5 bis hinter das zweite Modul 14 in einem Aufbau ohne Zoomsystem.

Die Divergenzeinheit 3 fächert ein nicht eingezeichnetes Laserstrahlbündel im gezeigten Beispiel in drei Teilstrahlbündel 7a, 7b und 7c auf. Jedes Teilstrahlbündel weist eine Vielzahl von Strahlen auf, von denen in Figur 11 jeweils ein Hauptstrahl 71a, 71b und 71c sowie zwei weitere Strahlen exemplarisch gezeigt sind.

In Figur 11 verlassen die Teilstrahlbündel 7a, 7b und 7c die Divergenzeinheit 3 kollimiert, so dass alle Strahlen der Teilstrahlbündel jeweils parallel zum entsprechenden Hauptstrahl 71a, 71b bzw. 71c verlaufen. Im Teilstrahlbündel 7a verlaufen also die Strahlen parallel zum Hauptstrahl 71a, während sie im Teilstrahlbündel 7b parallel zum Hauptstrahl 71b verlaufen.

Das erste Modul 5 verkleinert im gezeigten Beispiel die Winkel der Hauptstrahlen 71a, 71b, und 71c zueinander. In Figur 11 führt dies zu einer Parallelisierung der Hauptstrahlen 71a, 71b und 71c. Gleichzeitig fokussiert das erste Modul 5 die Teilstrahlbündel 7a, 7b und 7c jeweils. Nach Durchlaufen einer Fokusebene 10 laufen die Teilstrahlbündel jeweils wieder auseinander und treffen divergent auf das zweite Modul 14. Dieses kolimiert im gezeigten Beispiel die Teilstrahlbündel jeweils, so dass jedes Teilstrahlbündel kollimiert verläuft. Gleichzeitig lenkt das zweite Modul 14 die Teilstrahlbündel so ab, dass die Hauptstrahlen 71a, 71b und 71c der Teilstrahlbündel aufeinander zulaufen und sich am rechten Ende des in Figur 11 gezeigten Aufbaus schneiden.

Die anderen Elemente des erfindungsgemäßen Aufbaus wurden hier der Übersichtlichkeit halber weggelassen.

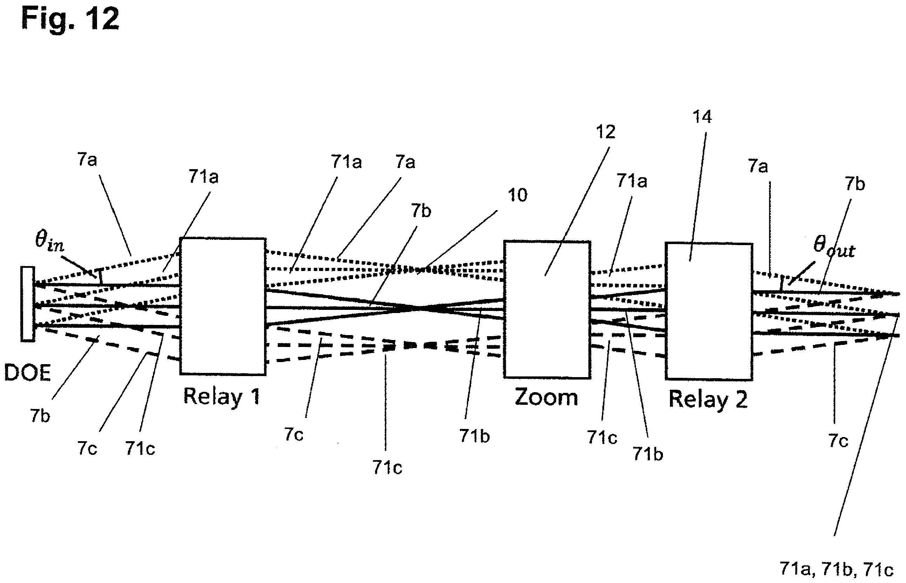

Figur 12 zeigt einen Aufbau, der jenem in Figur 11 gezeigten entspricht, jedoch zusätzlich ein Zoomsystem 12 aufweist. Es ist zu erkennen, dass das Zoomsystem 12 den Abstand der Hauptstrahlen 71a, 71b und 71c zueinander verändert, im gezeigten Beispiel verkleinert. Die anderen Elemente der erfindungsgemäßen Vorrichtung wurden in Figur 12 der Übersichtlichkeit halber weggelassen.

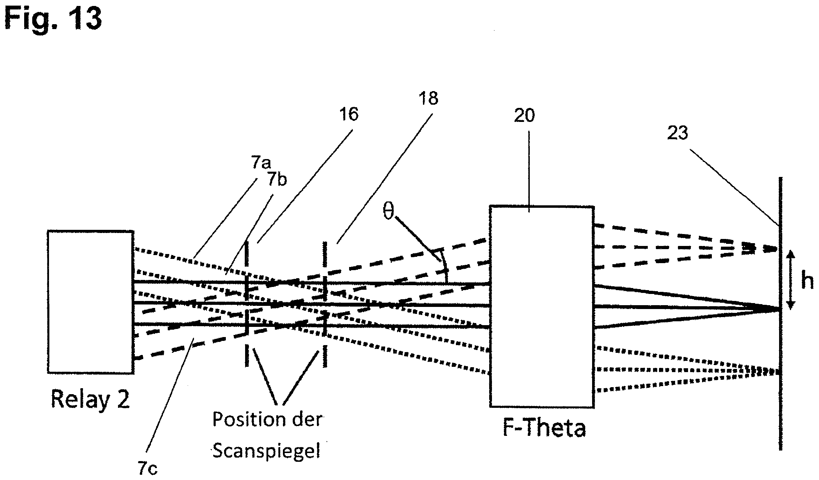

Figur 13 zeigt eine Illustration der vorzugsweisen Positionierung der Ablenkeinheit 16 und 18 in einer vorzugsweisen Konfiguration mit einem Galvanometer-Scanner mit zwei dynamisch bewegbaren Spiegeln 16 und 18 im Bereich hinter dem zweiten Modul 14. Vorzugsweise sind die Spiegel 16 und 18 der Ablenkeinheit so positioniert, dass sich jener Punkt, in dem sich die Hauptstrahlen aufgrund der Ablenkung durch das zweite Modul 14 schneiden, gerade in der Mitte zwischen den Spiegeln 16 und 18 befindet.

Wie bereits vorstehend beschrieben, durchlaufen die Teilstrahlbündel 7a, 7b und 7c nach Ablenkung durch die Spiegel 16 und 18 die Fokuseinheit 20, die hier eine F-$\Theta$-Linse ist. Die Fokuseinheit 20 fokussiert die Teilstahlbündel jeweils auf die zu bearbeitende Oberfläche 23.

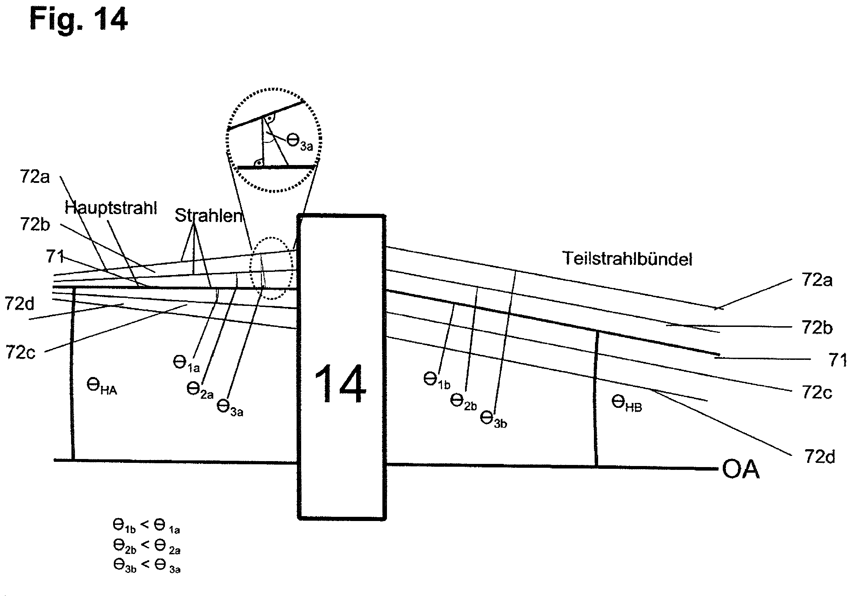

Figur 14 zeigt eine Definition der Winkel zwischen den Strahlen 72a, 72b, 72c und 72d bezogen auf einen Hauptstrahl 71 sowie die Wirkung des zweiten Moduls 14 auf die Winkel der Strahlen 72a, 72b, 72c und 72d in dem Teilstrahlbündel und auf den Winkel des Hauptstrahls 71 relativ zur optischen Achse.

Das Teilstrahlbündel 7 tritt mit einem Winkel seines Hauptstrahls $\Theta_{HA}$ gegenüber der optischen Achse OA auf das erste Modul 14. Das zweite Modul 14 verändert den Winkel des Hauptstrahls zur optischen Achse in den Winkel $\Delta_{HB}$ der im gezeigten Beispiel kleiner als der Winkel $\Theta_{HA}$ ist.

Der Winkel des Strahls 72a zum Hauptstrahl 71 wird mit $\Theta_{3a}$ bezeichnet, der Winkel des Strahls 72b zum Hauptstrahl 71 mit $\Theta_{2a}$ und der Winkel des Strahls 72c zum Hauptstrahl 71 mit $\Theta_{1a}$. Das erste Modul 14 verkleinert die Winkel der Strahlen 72a, 72b, 72c und 72d zum Hauptstrahl 71 jeweils, so dass die Winkel der austretenden Strahlen $\Theta_{1b}$, $\Theta_{2b}$ und $\Theta_{3b}$ jeweils kleiner sind als der Winkel des eintreffenden Strahls zum eintreffenden Hauptstrahl $\Theta_{1a}$, $\Theta_{2a}$ und $\Theta_{3a}$.

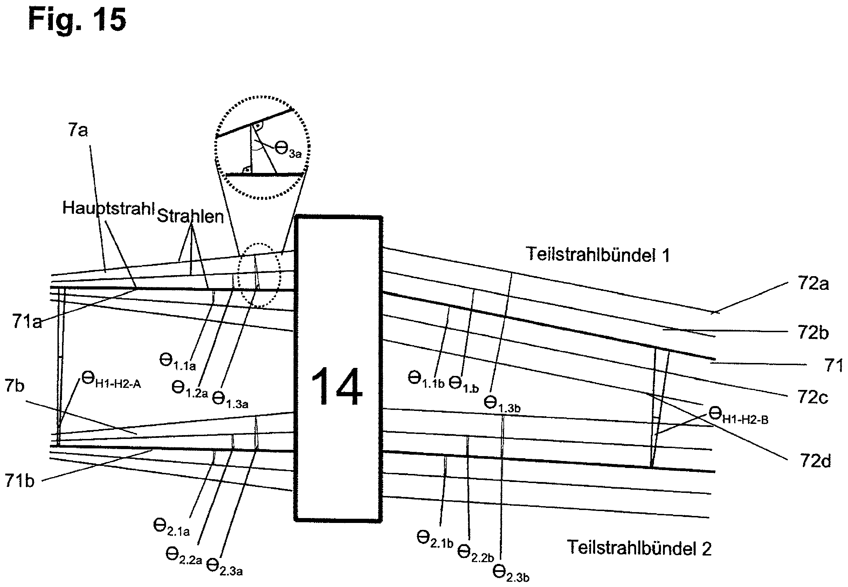

Figur 15 zeigt die in Figur 14 dargestellte Wirkung des zweiten Moduls auf die Strahlen und zusätzlich auf die Winkel zwischen Hauptstrahlen unterschiedlicher Teilstrahlbündel. Bezüglich der Wirkung auf die Winkel der Strahlen zum entsprechenden Hauptstrahl werde auf Figur 14 verwiesen.

Der Hauptstrahl des oberen Teilstrahlbündels 7a werde als 71a bezeichnet und der Hauptstrahl des unteren Teilstrahlbündels 7b als 71b.

Die Hauptstrahlen 71a und 71b treffen einen Winkel $\Theta_{H1-H2-A}$ leicht aufeinander zulaufend auf das zweite Modul 14 ein. Durch das zweite Modul 14 werden sie aufeinander zu abgelenkt, so dass sie hinter dem zweiten Modul 14 mit einem Winkel $\Theta_{H1-H2-B}$ stärker aufeinander zulaufen.

Die Winkel der einzelnen Strahlen zum jeweiligen Hauptstrahl 71a bzw. 71b werden durch das zweite Modul 14 verkleinert wie dies bereits in Figur 14 gezeigt worden war.

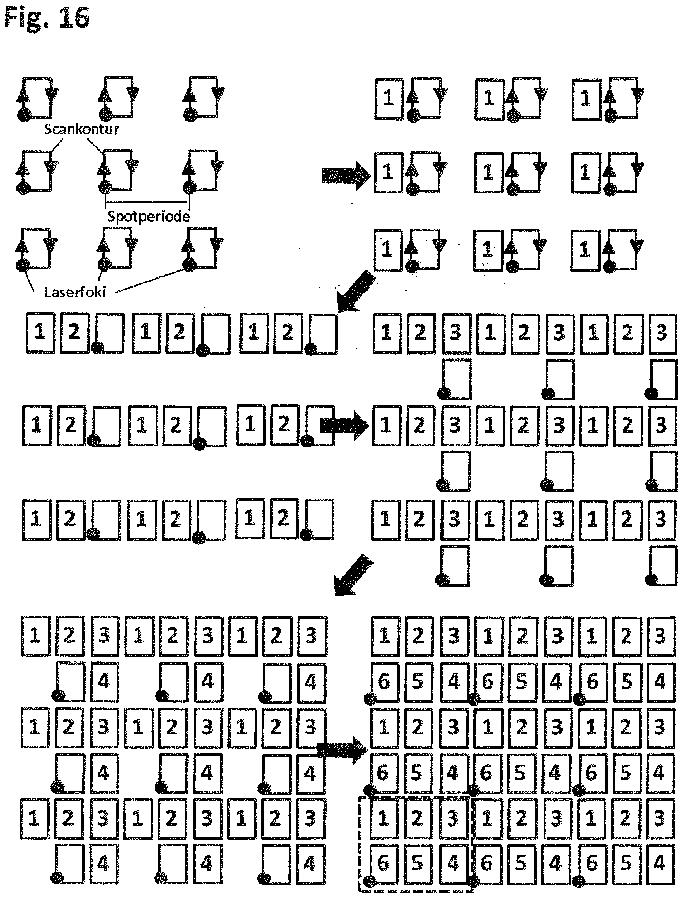

Figur 16 zeigt eine Scannstrategie zur Herstellung periodischer Muster mit der erfindungsgemäßen Vorrichtung. Es werden hierbei die Zwischenräume benachbarter Teilstrahlbündel mit Strukturen aufgefüllt. Die Periode der Strukturen ist dabei ein ganzzahliger Teiler der Spotperiode, also der Periode der Teilstrahlbündel auf der Bearbeitungsoberfläche 23.

Das Muster aus den Bearbeitungspunkten (Laserfoki) mit Abstand der Spotperiode wird dabei durch die Ablenkeinheit entlang einer Scankontur bewegt und somit eine Struktur erzeugt. Im Anschluss wird das Muster um eine erste Periode der Strukturen entlang einer ersten Achsrichtung versetzt und das Muster erneut mit der Ablenkeinheit entlang der gleichen Scankontur bewegt. Dies wird so lange ausgeführt bis der Bereich entlang der ersten Achsrichtung mit der Länge der Spotperiode mit Strukturen gefüllt wurde. Es entsteht somit eine geschlossene Zeile an periodischen Strukturen. Im Anschluss wird das Muster entlang einer zweiten Achsrichtung, die senkrecht zur ersten Achsrichtung steht, durch die Ablenkeinheit um eine zweite Periode der Strukturen versetzt. Erneut wird das Muster mit der Ablenkeinheit entlang der Scankontur bewegt und durch das bereits beschriebene Prozedere die nächste Zeile von Strukturen erstellt. Diese Strategie wird gemäß Figur 16 so lange durchgeführt bis ein geschlossener Bereich an periodischen Strukturen entstanden ist.

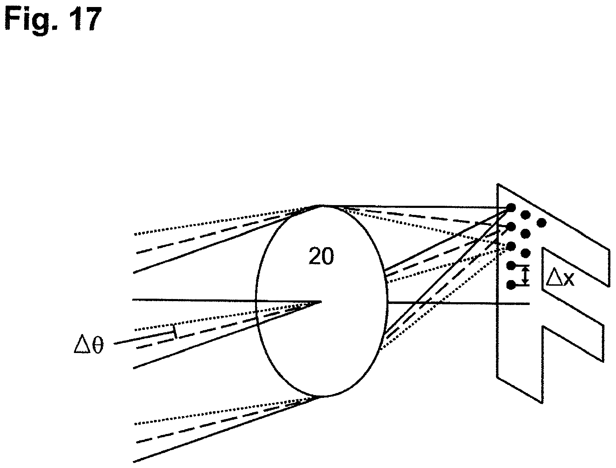

Figur 17 zeigt einen möglichen Strahlverlauf für die Abbildung einer kontinuierlichen Intensitätsverteilung. Dabei besteht die Abbildung aus unendlich vielen Bildpunkten wobei der Abstand benachbarter Punkte $\Delta X$ unendlich klein ist. Jedem Bildpunkt kann ein Teilstrahlbündel zugeordnet werden. Somit existieren in Strahlrichtung vor der Fokussiereinheit unendlich viele Teilstrahlbündel, deren Hauptstrahlen sich in ihrer Richtung nur durch einen infinitesimalen Winkel $\Delta\theta$ unterscheiden.

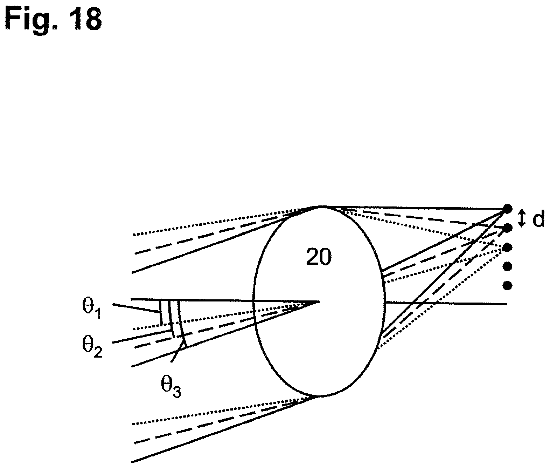

Figur 18 zeigt einen möglichen Strahlverlauf für die Abbildung einer diskontinuierlichen Intensitätsverteilung. In diesem Fall besteht die Abbildung aus einer endlichen Anzahl von Bildpunkten mit einer räumlichen Separation d > 0. Zu jedem der Punkte im Bildraum existiert in Strahlrichtung vor der Fokussiereinheit ein Teilstrahlbündel. Die Hauptstrahlen der Teilstrahlbündel unterscheiden sich in ihrer Richtung durch Winkel, die von Null verschieden sind.

**Patentansprüche**

1. Bearbeitungsvorrichtung zur Laserbearbeitung einer Oberfläche (23), aufweisend

   einen Laserstrahleingang, an welchem ein Laserstrahlbündel (2) in einer Strahlrichtung auf einer optischen Achse einstrahlbar ist,

   eine in Strahlrichtung hinter dem Laserstrahleingang angeordnete Rotationseinheit (28), durch welche das Laserstrahlbündel (2) gegenüber der optischen Achse in einer Versatzrichtung um einen Abstand parallel versetzbar ist, wobei die Versatzrichtung zeitlich die optische Achse umläuft,

   zumindest eine in Strahlrichtung hinter der Rotationseinheit (28) angeordnete Divergenzeinheit (3), mit welcher das Laserstrahlbündel (2) in eine Mehrzahl von Teilstrahlbündeln (4) auffächerbar ist, die in Richtung radial zur optischen Achse eine kontinuierliche oder diskontinuierliche Intensitätsverteilung bilden, wobei die Mehrzahl der Teilstrahlbündel (4) ein Gesamtstrahlenbündel (7, 9, 13, 15, 19, 21) darstellt,

   ein in Strahlrichtung hinter der Divergenzeinheit (3) angeordnete erstes Modul (5), mit dem die Teilstrahlbündel (4) jeweils fokussierbar sind,

   eine in Strahlrichtung hinter dem ersten Modul (5) angeordnete Selektionseinheit (24), mit der ein Teil der Teilstrahlbündel (4) aus dem Gesamtstrahlenbündel (7, 9, 13, 15, 19, 21) entfernbar ist,

   ein in Strahlrichtung hinter dem ersten Modul (5) angeordnetes zweites Modul (14), mit dem Winkel von Strahlen der Teilstrahlbündel (4) jeweils zueinander verkleinerbar sind,

   eine in Strahlrichtung hinter dem zweiten Modul (14) angeordnete Umlenkeinheit (16, 18), mit der die Teilstrahlbündel zeitabhängig ablenkbar sind, und

   eine in Strahlrichtung hinter dem zweiten Modul (14) angeordnete Fokussiereinheit (20), mit der die verbleibenden Teilstahlbündel (7\*) des Gesamtstrahlenbündels (7, 9, 13, 15, 19, 21) jeweils fokussierbar sind.

2. Bearbeitungsvorrichtung nach einem der vorhergehenden Ansprüche,

   weiter aufweisend ein Zoomsystem (12), das in Strahlrichtung hinter der Divergenzeinheit (3), vorzugsweise hinter dem ersten Modul angeordnet ist, mit welchem ein Abstand zwischen den Teilstrahlbündeln des Gesamtstrahlenbündels (7, 9, 13, 15, 19, 21) und/oder zwischen Hauptstrahlen (71a, b, c) der Teilstrahlbündel (4) skalierbar ist.

3. Bearbeitungsvorrichtung nach einem der vorhergehenden Ansprüche, wobei mit dem ersten Modul (5) Winkel zwischen Hauptstrahlen (71a, b, c) der Mehrzahl von Teilstrahlbündeln (4) veränderbar sind, wobei vorzugsweise mit dem ersten Modul (5) die Hauptstrahlen der Teilstrahlbündel (4) zueinander parallelisierbar sind.

4. Bearbeitungsvorrichtung nach einem der vorhergehenden Ansprüche, wobei die Divergenzeinheit (3) um die optische Achse und/oder eine zur optischen Achse senkrechte Achse drehbar gelagert ist.

5. Bearbeitungsvorrichtung nach einem der vorhergehenden Ansprüche, wobei die Selektionseinheit (24) einen statischen Spiegel oder ein statisches oder dynamisches Mikrospiegelarray mit einer Vielzahl von Mikrospiegeln aufweist oder daraus besteht, wobei jeweils einer oder mehrere der zu entfernenden Teilstrahlbündel durch einen Mikrospiegel auf einen Absorber (24\*) umlenkbar sind.

6. Bearbeitungsvorrichtung nach einem der vorhergehenden Ansprüche,

   wobei die Selektionseinheit (24) eine Maske (8) aufweist, die zu entfernende Teilstrahlbündel ausblendet und/oder absorbiert, wobei vorzugsweise die Maske beweglich ist, so dass sie in den Strahlengang der zu entfernenden Teilstrahlbündel bewegbar ist.

7. Bearbeitungsvorrichtung nach einem der vorhergehenden Ansprüche, wobei die Divergenzeinheit (3) ein diffraktives optisches Element, vorzugsweise ein Gitter, ist, und mit der Selektionseinheit (24) zumindest ein Teilstrahlbündel entfernbar ist, das eine Hauptordnung eines durch das diffraktive optische Element erzeugten Beugungsmusters ist.

8. Bearbeitungsvorrichtung nach einem der vorhergehenden Ansprüche,

   wobei die Divergenzeinheit (3) in einer Eintrittspupille des ersten Moduls (5) angeordnet ist und/oder wobei das zweite Modul (14) die Hauptstrahlen der verbleibenden Teilstrahlbündel (7\*) so zueinander konvergiert, dass sie in einer Ebene (25) entlang der optischen Achse zwischen dem zweiten Modul (14) und der Fokussiereinheit (20) einen minimalen Abstand zueinander annehmen und hinter dieser Ebene (25) bis zur Fokussiereinheit (20) auseinanderlaufen.

9. Bearbeitungsvorrichtung nach einem der vorhergehenden Ansprüche, wobei die Fokussiereinheit (20) die Hauptstrahlen (71a, b, c) der verbleibenden Teilstrahlbündel (7\*) auf die zu bearbeitende Oberfläche (23) fokussiert.

10. Bearbeitungsvorrichtung nach einem der vorhergehenden Ansprüche, weiter aufweisend eine Fokusshift-Einheit , die entlang der optischen Achse in Strahlrichtung hinter dem Laserstahleingang und vor der Rotationseinheit (28) angeordnet ist, und mit der Winkel zwischen Strahlen des Laserstrahlbündels (2) so einstellbar sind, dass die Strahlen auf einen Punkt auf der optischen Achse hinter der Fokusshift-Einheit zulaufen oder in einer Projektion der Strahlen von einem Punkt auf der optischen Achse vor oder in der Fokusshift-Einheit weglaufen, wobei der Abstand des entsprechenden Punktes von der Fokusshift-Einheit entlang der optischen Achse veränderbar ist.

11. Bearbeitungsvorrichtung nach einem der Ansprüche 2 bis 10, wobei das Zoomsystem (12) eine erste Gruppe von anamorphotischen Prismen (91) und vorzugsweise eine zur ersten Gruppe um die optische Achse um 90° gedrehte zweite Gruppe von anamorphotischen Prismen (92) aufweist, wobei die Prismen der ersten Gruppe(91) und gegebenenfalls die Prismen der zweiten Gruppe (92) jeweils gegeneinander um Achsen drehbar sind, die senkrecht zur optischen Achse stehen und parallel liegen zu nicht parallelen Flächen des Prismas, wobei vorzugsweise die erste Gruppe zwischen der Divergenzeinheit und dem ersten Modul angeordnet ist, und gegebenenfalls die zweite Gruppe zwischen der Selektionseinheit und dem zweiten Modul angeordnet ist.

12. Bearbeitungsvorrichtung nach einem der Ansprüche 2 bis 10, wobei das Zoomsystem (12) eine erste Gruppe von Zylinderlinsen (12a) und vorzugsweise eine zur ersten Gruppe um die optische Achse um 90° gedrehte zweite Gruppe von Zylinderlinsen (12b) aufweist, wobei die Zylinderlinsen der ersten Gruppe (12a) und gegebenenfalls die Zylinderlinsen der zweiten Gruppe (12b) jeweils gegeneinander entlang der optischen Achse verschiebbar sind, wobei vorzugsweise die erste Gruppe zwischen der Divergenzeinheit und dem ersten Modul angeordnet ist, und gegebenenfalls die zweite Gruppe zwischen der Selektionseinheit und dem zweiten Modul angeordnet ist.

13. Bearbeitungsvorrichtung nach einem der vorhergehenden Ansprüche, wobei die Rotationseinheit (28) eine ebene Planparallelplatte aufweist, die gegenüber der optischen Achse gekippt angeordnet ist, und um die optische Achse drehbar ist,
oder wobei die Rotationseinheit eine Anordnung mit zumindest zwei Keilplatten aufweist oder daraus besteht, die um die optische Achse drehbar sind,
oder wobei die Rotationseinheit ein Schmidt-Pechan Prisma, einen rotierenden K-Spiegel oder Dove-Prisma aufweist oder daraus besteht, das um die optische Achse drehbar ist.

14. Bearbeitungsvorrichtung nach einem der vorhergehenden Ansprüche, wobei die Umlenkeinheit (16,18) so positioniert wird, dass ein effektiver Drehpunkt der Umlenkeinheit mit einem durch das erste und das zweite Modul erzeugten Bild der Divergenzeinheit übereinstimmt.

15. Bearbeitungsvorrichtung nach einem der vorhergehenden Ansprüche, wobei die Fokussiereinheit (20) ein F-theta Objektiv aufweist oder ist.

16. Verfahren zur Laserbearbeitung einer Oberfläche (23), wobei ein Laserstrahlbündel (2) in einer Strahlrichtung auf einer optischen Achse eingestrahlt wird, das Laserstrahlbündel (2) gegenüber der optischen Achse in einer Versatzrichtung um einen Abstand parallel versetzt wird, wobei die Versatzrichtung zeitlich um die optische Achse umläuft, das Laserstrahlbündel in eine Mehrzahl von Teilstrahlbündeln (4) aufgefächert wird, die in Richtung radial zur optischen Achse eine kontinuierliche oder diskontinuierliche Intensitätsverteilung bilden, wobei die Mehrzahl der Teilstrahlbündel (4) ein Gesamtstrahlenbündel (7, 9, 13, 15, 19, 21) darstellt, die Teilstrahlbündel (4) jeweils fokussiert werden, ein Teil der Teilstrahlbündel (4) aus dem Gesamtstrahlenbündel (7, 9, 13, 15, 19, 21) entfernt wird, ein Winkel zwischen Strahlen der verbleibenden Teilstrahlbündel (4) jeweils verkleinert wird, die Teilstrahlbündel (4) mit jeweils verkleinerten Winkeln zwischen ihren Strahlen zeitabhängig abgelenkt werden, und die verbleibenden Teilstrahlbündel des Gesamtstrahlenbündels (7, 9, 13, 15, 19, 21) jeweils fokussiert werden.

17. Verfahren nach dem vorhergehenden Anspruch, wobei eine Bearbeitungsvorrichtung nach Anspruch 1 verwendet wird, und wobei die Umlenkeinheit (16,18) eine Bewegung ausführt die zu einer kreisförmigen Ablenkung des Strahlenbündels führt.

18. Verfahren nach Anspruch 17, wobei die Rotation der Rotationseinheit (28) mit der Ablenkung der Umlenkeinheit (16,18) synchronisiert ist.

**Claims**

1. Machining device for laser machining of a surface (23),
having
a laser beam entrance where a laser beam (2) can be radiated in in a radiation direction on an optical axis,
a rotation unit (28) which is disposed in the radiation direction behind the laser beam entrance by means of which the laser beam (2) can be displaced parallel relative to the optical axis by a spacing in an offset direction, the offset direction rotating temporally about the optical axis,

at least one divergence unit (3) which is disposed in the radiation direction behind the rotation unit (28) and with which the laser beam (2) can be fanned out into a plurality of partial beams (4) which in the direction radially to the optical axis form a continuous or discontinuous intensity distribution, the plurality of partial beams (4) representing a total beam (7, 9, 13, 15, 19, 21),

a first module (5) which is disposed in the radiation direction behind the divergence unit (3) and with which the partial beams (4) respectively can be focused,

a selection unit (24) which is disposed in the radiation direction behind the first module (5) and with which a part of the partial beams (4) can be removed from the total beam (7, 9, 13, 15, 19, 21),

a second module (14) which is disposed in the radiation direction behind the first module (5) and with which angles of rays of the partial beams (4) respectively can be made smaller relative to each other,

a deflection unit (16, 18) which is disposed in the radiation direction behind the second module (14) and with which the partial beams can be deflected as a function of time, and

a focusing unit (20) which is disposed in the radiation direction behind the second module (14) and with which the remaining partial beams (7*) of the total beam (7, 9, 13, 15, 19, 21) respectively can be focused.

2. Machining device according to one of the preceding claims, having furthermore a zoom system (12) which is disposed in the radiation direction behind the divergence unit (3), preferably behind the first module, and with which a spacing between the partial beams of the total beam (7, 9, 13, 15, 19, 21) and/or between main rays (71a, b, c) of the partial beams (4) can be scaled.

3. Machining device according to one of the preceding claims, angles between main rays (71a, b, c) of the plurality of partial beams (4) being able to be changed by the first module (5), preferably the main rays of the partial beams (4) being able to be made parallel relative to each other by the first module.

4. Machining device according to one of the preceding claims, the divergence unit (3) being mounted rotatably about the optical axis and/or about an axis perpendicular relative to the optical axis.

5. Machining device according to one of the preceding claims, the selection unit (24) having a static mirror or a dynamic micromirror array with a large number of micromirrors or consisting thereof, respectively one or more of the partial beams to be removed being able to be deflected onto an absorber (24*) by a micromirror.

6. Machining device according to one of the preceding claims, the selection unit (24) having a mask (8) which masks and/or absorbs the partial beams to be removed, the mask preferably being moveable so that it can be moved into the radiation path of the partial beams to be removed.

7. Machining device according to one of the preceding claims, the divergence unit (3) being a diffractive optical element, preferably a grating, and with the selection unit (24) at least one partial beam, which is a main order of a diffraction pattern produced by the diffractive optical element, being able to be removed.

8. Machining device according to one of the preceding claims, the divergence unit (3) being disposed in an entrance pupil of the first module (5) and/or the second module (14) converging the main rays of the remaining partial beams (7*) relative to each other such that they assume a minimum spacing relative to each other in a plane (25) along the optical axis between the second module (14) and the focusing unit and move apart behind this plane (25) up to the focusing unit (20).

9. Machining device according to one of the preceding claims, the focusing unit (20) focusing the main rays (71a, b, c) of the remaining partial beams (7*) onto the surface (23) to be machined.

10. Machining device according to one of the preceding claims, having furthermore a focus-shift unit which is disposed along the optical axis in the radiation direction behind the laser beam entrance and in front of the rotation unit (28), and with which angles between rays of the laser beam (2) can be adjusted such that the rays taper towards a point on the optical axis behind the focus-shift unit or move apart in a projection of the rays from a point on the optical axis in front of or in the focus-shift unit, the spacing of the corresponding point being able to be changed along the optical axis by the focus-shift unit.

11. Machining device according to one of the claims 2 to 10, the zoom system (12) having a first group of anamorphotic prisms (91) and preferably a second group of anamorphotic prisms (92) which is rotated by 90° about the optical axis relative to the first group, the prisms of the first group (91) and possibly the prisms of the second group (92) being rotatable respectively mutually about axes which are perpendicular to the optical axis and are parallel to non-parallel surfaces of the prism, preferably the first group being disposed between the divergence unit and the first module and possibly the second group being disposed between the selection unit and the second module.

**12.** Machining device according to one of the claims 2 to 10, the zoom system (12) having a first group of cylindrical lenses (12a) and preferably a second group of cylindrical lenses (12b) which is rotated by 90° about the optical axis relative to the first group, the cylindrical lenses of the first group (12a) and possibly the cylindrical lenses of the second group (12b) respectively being able to be displaced mutually along the optical axis, preferably the first group being disposed between the divergence unit and the first module and possibly the second group being disposed between the selection unit and the second module.

**13.** Machining device according to one of the preceding claims, the rotation unit (28) having a flat plane-parallel plate which is disposed tilted relative to the optical axis and is rotatable about the optical axis, or the rotation unit having an arrangement with at least two wedge plates or consisting thereof, which wedge plates are rotatable about the optical axis, or the rotation unit having a Schmidt-Pechan prism, a rotating K-mirror or Dove prism or consisting thereof, which prism is rotatable about the optical axis.

**14.** Machining device according to one of the preceding claims, the deflection unit (16, 18) being positioned such that an effective point of rotation of the deflection unit matches an image of the divergence unit produced by the first and the second module.

**15.** Machining device according to one of the preceding claims, the focusing unit (20) having or being an F-theta lens.

**16.** Method for the laser machining of a surface (23), a laser beam (2) being radiated in a radiation direction on an optical axis, the laser beam (2) being displaced parallel by a spacing relative to the optical axis in an offset direction, the offset direction rotating temporally about the optical axis, the laser beam being fanned out into a plurality of partial beams (4) which form, in the direction radially to the optical axis, a continuous or discontinuous intensity distribution, the plurality of partial beams (4) representing a total beam (7, 9, 13, 15, 19, 21), the partial beams (4) respectively being focused, some of the partial beams (4) being removed from the total beam (7, 9, 13, 15, 19, 21), an angle between rays of the remaining partial beams (4) respectively being made smaller, the partial beams (4) having respectively angles between their rays made smaller being deflected, as a function of time, and

the remaining partial beams of the total beam (7, 9, 13, 15, 19, 21) respectively being focused.

**17.** Method according to the preceding claim, a machining device according to claim 1 being used and the deflection unit (16, 18) performing a movement which leads to a circular deflection of the beam.

**18.** Method according to claim 17, the rotation of the rotation unit (28) being synchronised with the deflection of the deflection unit (16, 18).

**Revendications**

**1.** Dispositif d'usinage pour l'usinage au laser d'une surface (23), comprenant
une entrée de rayon laser, au niveau de laquelle un faisceau laser (2) peut être introduit dans une direction de rayonnement sur un axe optique,
une unité de rotation (28) disposée dans la direction de rayonnement derrière l'entrée de rayon laser, à l'aide de laquelle le faisceau laser (2) peut être décalé d'une distance parallèlement par rapport à l'axe optique dans une direction de décalage, la direction de décalage tournant autour de l'axe optique de manière temporelle,
au moins une unité de divergence (3) disposée dans la direction de rayonnement derrière l'unité de rotation (28), avec laquelle le faisceau laser (2) peut être divisé en une pluralité de faisceaux partiels (4), qui constituent, dans une direction radiale par rapport à l'axe optique, une répartition d'intensité continue ou discontinue, la pluralité de faisceaux partiels (4) constituant un faisceau global (7, 9, 13, 15, 19, 21),
un premier module (5) disposé dans la direction de rayonnement derrière l'unité de divergence (3), avec lequel les faisceaux partiels (4) peuvent être focalisés,
une unité de sélection (24) disposée dans la direction de rayonnement derrière le premier module (5), avec laquelle une partie des faisceaux partiels (4) peut être éliminée du faisceau global (7, 9, 13, 15, 19, 21),
un deuxième module (14) disposé dans la direction de rayonnement derrière le premier module (5), avec lequel les angles entre des rayons des faisceaux partiels (4) peuvent être diminués,
une unité de renvoi (16, 18) disposée dans la direction de rayonnement derrière le deuxième module (14), avec laquelle les faisceaux partiels peuvent être déviés en fonction du temps et
une unité de focalisation (20) disposée dans la direction de rayonnement derrière le deuxième module (14), avec laquelle les faisceaux partiels restants (7*) du faisceau global (7, 9, 13, 15, 19, 21) peuvent être focalisés.

**2.** Dispositif d'usinage selon l'une des revendications précédentes,
comprenant en outre un système de zoom (12), qui est disposé dans la direction de rayonnement derrière l'unité de divergence (3), de préférence derrière le premier module, avec lequel une distance entre les faisceaux partiels du faisceau global (7, 9, 13, 15, 19, 21) et/ou entre les rayons principaux (71a, b, c) des faisceaux partiels (4) peut être modifiée.

3. Dispositif d'usinage selon l'une des revendications précédentes, dans lequel, avec le premier module (5), les angles entre les rayons principaux (71a, b, c) de la pluralité de faisceaux partiels (4) peuvent être modifiés, de préférence, avec le premier module (5), les rayons principaux des faisceaux partiels (4) pouvant être parallélisés entre eux.

4. Dispositif d'usinage selon l'une des revendications précédentes, l'unité de divergence (3) étant logée de manière rotative autour de l'axe optique et/ou d'un axe perpendiculaire à l'axe optique.

5. Dispositif d'usinage selon l'une des revendications précédentes, l'unité de sélection (24) comprenant ou étant constituée d'un miroir statique ou une matrice de miroirs statique ou dynamique avec une pluralité de micro-miroirs, un ou plusieurs des faisceaux partiels à éliminer pouvant être déviés par un micro-miroir vers un absorbeur (24*).

6. Dispositif d'usinage selon l'une des revendications précédentes,
l'unité de sélection (24) comprenant un masque (8), qui masque et/ou absorbe les faisceaux à éliminer, de préférence le masque étant mobile de façon à ce qu'il puisse être déplacé dans le trajet des rayons des faisceaux partiels à éliminer.

7. Dispositif d'usinage selon l'une des revendications précédentes, l'unité de divergence (3) étant un élément de diffraction optique, de préférence une grille et, avec l'unité de sélection (24), au moins un faisceau partiel, qui est un ordre principal d'un motif de diffraction produit par l'élément de diffraction optique, pouvant être éliminé.

8. Dispositif d'usinage selon l'une des revendications précédentes,
l'unité de divergence (3) étant disposée dans une pupille d'entrée du premier module (5) et/ou le deuxième module (14) faisant converger les rayons principaux des faisceaux partiels restants (7*) de façon à ce qu'ils adoptent, dans le plan (25) le long de l'axe optique, entre le deuxième module (14) et l'unité de focalisation (20), une distance minimale entre eux et à ce que les rayons divergent derrière ce plan (25) jusqu'à l'unité de focalisation (20).

9. Dispositif d'usinage selon l'une des revendications précédentes, l'unité de focalisation (20) focalisant les rayons principaux (71a, b, c) des faisceaux partiels restants (7*) sur la surface à usiner (23).

10. Dispositif d'usinage selon l'une des revendications précédentes, comprenant en outre une unité de décalage de focalisation qui est disposée le long de l'axe optique dans la direction de rayonnement derrière l'entrée de rayons laser et avant l'unité de rotation (28), et avec laquelle les angles entre les rayons du faisceau laser (2) peuvent être réglés, de façon à ce que les rayons convergent vers un point sur l'axe optique derrière l'unité de décalage de focalisation ou s'éloignent dans une projection des rayons d'un point sur l'axe optique avant ou dans l'unité de décalage de focalisation, la distance entre le point correspondant et l'unité de décalage de focalisation le long de l'axe optique pouvant être modifiée.

11. Dispositif d'usinage selon l'une des revendications 2 à 10, le système de zoom (12) comprenant un premier groupe de prismes anamorphiques (91) et, de préférence, un deuxième groupe de prismes anamorphiques (92) tourné de 90° autour de l'axe optique par rapport au premier groupe, les prismes du premier groupe (91) et, le cas échéant les prismes du deuxième groupe (92), pouvant être tournés les uns par rapport aux autres autour d'axes qui sont perpendiculaires à l'axe optique et parallèles à des surfaces non parallèles du prisme, de préférence le premier groupe étant disposé entre l'unité de divergence et le premier module, et le cas échéant le deuxième groupe étant disposé entre l'unité de sélection et le deuxième module.

12. Dispositif d'usinage selon l'une des revendications 2 à 10, le système de zoom (12) comprenant un premier groupe de lentilles cylindriques (12a) et de préférence un deuxième groupe de lentilles cylindriques (12b) tourné de 90° autour de l'axe optique par rapport au premier groupe, les lentilles cylindriques du premier groupe (12a) et le cas échéant les lentilles cylindriques du deuxième groupe (12b) pouvant être déplacées les unes par rapport aux autres le long de l'axe optique, de préférence le premier groupe étant disposé entre l'unité de divergence et le premier module, et le cas échéant le deuxième groupe étant disposé entre l'unité de sélection et le deuxième module.

13. Dispositif d'usinage selon l'une des revendications précédentes, l'unité de rotation (28) comprenant une plaque parallèle plane qui est disposée de manière inclinée par rapport à l'axe optique et étant rotative autour de l'axe optique,
ou l'unité de rotation comprenant ou étant constituée d'une disposition avec au moins deux plaques cunéiformes, qui peuvent tourner autour de l'axe optique,

ou l'unité de rotation comprenant ou étant constituée d'un prisme de Schmidt-Pechan, un miroir K rotatif ou un prisme de Dove, pouvant tourner autour de l'axe optique.

**14.** Dispositif d'usinage selon l'une des revendications précédentes, l'unité de renvoi (16, 18) étant positionnée de façon à ce qu'un centre de rotation effectif de l'unité de renvoi coïncide avec une image de l'unité de divergence générée par le premier et le deuxième module.

**15.** Dispositif d'usinage selon l'une des revendications précédentes, l'unité de focalisation (20) comprenant ou étant un objectif F-théta.

**16.** Procédé d'usinage au laser d'une surface (23), un faisceau laser (2) étant irradié dans une direction de rayonnement sur un axe optique, le faisceau laser (2) étant décalé parallèlement par rapport à l'axe optique dans une direction de décalage d'une certaine distance, la direction de décalage tournant autour de l'axe optique de manière temporelle, le faisceau laser étant divisé en une pluralité de faisceaux partiels (4), qui forment dans la direction radiale par rapport à l'axe optique, une répartition d'intensité continue ou discontinue, la pluralité de faisceaux partiels (4) constituant un faisceau global (7, 9, 13, 15, 19, 21), chaque faisceau partiel (4) étant focalisé, une partie des faisceaux partiels (4) étant éliminée du faisceau global (7, 9, 13, 15, 19, 21), un angle entre les rayons des faisceaux partiels restants (4) étant diminués, les faisceaux partiels (4) étant déviés chacun avec des angles réduits entre leurs rayons en fonction du temps, et chaque faisceau partiel restant du faisceau global (7, 9, 13, 15, 19, 21) étant focalisé.

**17.** Procédé selon la revendication précédente, un dispositif d'usinage selon la revendication 1 étant utilisé et l'unité de renvoi (16, 18) effectuant un mouvement qui provoque une déviation circulaire du faisceau.

**18.** Procédé selon la revendication 17, la rotation de l'unité de rotation (28) étant synchronisée avec la déviation de l'unité de renvoi (16, 18).

Fig. 1

EP 3 094 444 B1

Fig. 2

# Fig. 3

# Fig. 4

EP 3 094 444 B1

Werkstück

Fig. 5

## Fig. 6

Werkstück

Fig. 7

28a

28b

28c

## Fig. 8

# Fig. 9

$$\theta_1 < \theta_2 < \theta_3 \quad \text{bzw.} \quad d_1 < d_2 < d_3$$

EP 3 094 444 B1

Fig. 10

Fig.11

**Fig. 12**

DOE

Relay 1

Zoom

Relay 2

$\theta_{in}$

$\theta_{out}$

7a
71a
71a   7a
7b
10
12
71a
14
7a
7b

7b
7c   71c
7c
71c
71b
71c   71b
7c

71a, 71b, 71c

Fig. 13

# Fig. 14

72a

Hauptstrahl    Strahlen

72b

71

$\Theta_{3a}$

Teilstrahlbündel

72a

72d

72b

72c

71

$\Theta_{HA}$

$\Theta_{1a}$

$\Theta_{2a}$

$\Theta_{3a}$

14

$\Theta_{1b}$

$\Theta_{2b}$

$\Theta_{3b}$

72c

$\Theta_{HB}$

72d

OA

$\Theta_{1b} < \Theta_{1a}$

$\Theta_{2b} < \Theta_{2a}$

$\Theta_{3b} < \Theta_{3a}$

EP 3 094 444 B1

**Fig. 15**

7a

$\Theta_{3a}$

Hauptstrahl Strahlen

Teilstrahlbündel 1

72a

71a

72b

71

$\Theta_{1.1a}$

$\Theta_{1.1b}$ $\Theta_{1.b}$

72c

7b

$\Theta_{H1-H2-A}$

$\Theta_{1.2a}$ $\Theta_{1.3a}$

**14**

$\Theta_{1.3b}$

$\Theta_{H1-H2-B}$

71b

72d

$\Theta_{2.1a}$

$\Theta_{2.1b}$ $\Theta_{2.2b}$

Teilstrahlbündel 2

$\Theta_{2.2a}$ $\Theta_{2.3a}$

$\Theta_{2.3b}$

EP 3 094 444 B1

# Fig. 16

Fig. 17

EP 3 094 444 B1

Fig. 18

EP 3 094 444 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9409989 A